# EUROPEAN PATENT SPECIFICATION

(11) **EP 2 699 527 B1**
(45) Date of publication and mention of the grant of the patent: **12.05.2021**
(21) Application number: 12710276.2
(22) Date of filing: 23.03.2012
(51) Int. Cl.: C04B 28/02, C04B 28/04, C04B 28/08, C04B 28/10, C04B 28/12, C04B 28/14, C04B 28/18, C04B 28/22, C04B 41/45, C04B 41/50

(54) **PROCESS FOR PRODUCING ACCELERATOR COMPOSITIONS**
VERFAHREN ZUR HERSTELLUNG VON BESCHLEUNIGERZUSAMMENSETZUNGEN
PROCÉDÉ DE PRODUCTION DE COMPOSITIONS D'ACCÉLÉRATEUR

(30) Priority: 21.04.2011 EP 11163464
(43) Date of publication of application: 26.02.2014
(73) Proprietor: Construction Research & Technology GmbH, 83308 Trostberg (DE)
(72) Inventor: BICHLER, Manfred, 84549 Engelsberg (DE); HESSE, Christoph, 85560 Ebersberg (DE)
(74) Representative: BASF IP Association
(86) International application number: PCT/EP2012/055210
(87) International publication number: WO 2012/143205

(56) References cited:
- EP-A1- 2 075 240
- WO-A1-2010/026155
- WO-A1-2011/026720
- WO-A2-2011/026825

## Description

The present invention relates to a process for producing solid, preferably pulverulent, compositions containing calcium silicate hydrate and a water-soluble comb polymer which is suitable as plasticizer for hydraulic binders, wherein the following process steps are carried out:
a) mixing of an aqueous suspension containing calcium silicate hydrate which is preferably suitable as setting and curing accelerator for (portland) cement-containing binder systems with at least one water-soluble comb polymer which is suitable as plasticizer for hydraulic binders,
b) optionally setting of a suitable solids content of the product from step a) by dilution with water and
c) drying of the product from step a) or b), preferably at temperatures below 150°C,
wherein the solid composition has a weight ratio of the (co)polymer or (co)polymers to the calcium silicate hydrate of from 1/100 to 100/1 and wherein the water soluble comb polymer which is suitable as plasticizer for hydraulic binders has an average ratio of the number of moles of carboxyl and/or carboxylate groups to the total molar mass of the comb polymer from 1/200 to 1/1500 mol/(g/mol), wherein cations, including protons, associated with the comb polymer are not taken into account in calculating the total molar mass of the comb polymer.

Pulverulent curing accelerators for cement-based building material mixtures which, owing to their solid state, are fundamentally suitable for use in dry mortar mixtures are known in the prior art. Examples of such accelerators are calcium nitrate, calcium formate, calcium chloride and lithium carbonate. A disadvantage of chloride- or nitrate-containing accelerators is their adverse effects on the corrosion resistance of, for example, steel-reinforced concrete. Due to national standards, there are use restrictions. Efflorescence on the surface of cured building materials can, especially when calcium salts are used, likewise represent a problem (for example in the case of calcium formate).

In many applications, it is necessary to achieve an even greater acceleration of setting and higher early strengths in cement-based systems, for example in mortar or concrete. However, the abovementioned types of accelerators and other commercial accelerators do not at present make it possible for a person skilled in the art to achieve this objective using relatively small amounts of the accelerator, for example less than 0.5% based on the mass of the (portland) cement used.

There is therefore a great need to achieve higher early strengths in many applications, which is not possible by means of the accelerators, in particular pulverulent accelerators, known at present in the prior art.

Suspensions of calcium silicate hydrate (C-S-H) have since recently been used as highly efficient accelerators in cement-containing building material mixtures such as concrete. They make it possible to achieve significantly higher early strengths (6 hours) compared to the commercial accelerators. Essentially no decrease in the final strengths (28 days) is observed. Such suspensions are described in WO 2010026155 A1. WO 2010026155 A1 also indicates that the suspensions can be dried by conventional processes such as spray drying. However, for practical reasons, it is not possible to formulate dry mortar mixtures containing essentially (portland) cement as binder or other binder systems which set hydraulically in the presence of water using the water-containing suspensions of calcium silicate hydrate (C-S-H) since the water content of the suspensions would lead to an unacceptable, at least partially premature hydration of the binder.

As in the case of non-dry mortar applications such as concrete, there is a great need in the technical field of cement-containing dry mortar mixtures for suitable, in particular dry, preferably pulverulent, highly effective accelerators so as to make a significant increase in the early strengths (after 6 hours) possible even in dry mortar systems, preferably without decreases in the final strengths (strengths after 28 days). In the concrete sector, dry or pulverulent additives are not absolutely necessary, but cost advantages can be achieved by the avoidance of unnecessary transport of water. Efflorescence on the surface of the cured building materials should also be prevented if possible.

It is therefore an object of the present invention to provide accelerators which overcome the abovementioned disadvantages of the prior art. In particular, the accelerators should make possible an effective increase in the early strengths, in the case of dry mortar mixtures at the same time give good compatibility with water-sensitive binders or binders which set hydraulically in the presence of water, for example (portland) cement. In particular, it is an object of the invention for the final strengths (after 28 days) of the building material mixtures not to be adversely affected while the early strengths are reflectively increased.

The object of the invention is achieved by a process for producing solid, preferably pulverulent compositions containing calcium silicate hydrate and a water-soluble comb polymer which is suitable as plasticizer for hydraulic binders, wherein the following process steps are carried out:
a) contacting of an aqueous suspension containing calcium silicate hydrate which is preferably suitable as setting and curing accelerator for (portland) cement-containing binder systems with at least one water-soluble comb polymer which is suitable as plasticizer for hydraulic binders,
b) optionally setting of a suitable solids content of the product from step a) by dilution with water and
c) drying of the product from step a) or b), preferably at temperatures below 150°C,
wherein the solid composition has a weight ratio of the (co)polymer or (co)polymers to the calcium silicate hydrate of from 1/100 to 100/1 and wherein the water soluble comb polymer which is suitable as plasticizer for hydraulic binders has an average ratio of the number of moles of carboxyl and/or carboxylate groups to the total molar mass of the comb polymer from 1/200 to 1/1500 mol/(g/mol), wherein cations, including protons, associated with the comb polymer are not taken into account in calculating the total molar mass of the comb polymer.

Furthermore, the object is achieved by the compositions which can be obtained from the process of the invention. The object is likewise achieved by the use of the compositions which can be obtained from the process of the invention as curing accelerators in building material mixtures containing (portland) cement, slag sand, fly ash, silica dust, metakaolin, natural pozzolanas, calcined oil shales and/or calcium aluminate cement, preferably by the use of the compositions which can be obtained from the process of the invention as curing accelerators in building material mixtures containing (portland) cement and binders based on calcium sulphate, particularly preferably by the use of the compositions which can be obtained from the process of the invention as curing accelerators in building material mixtures containing essentially (portland) cement as binder.

The object is also achieved by building material mixtures containing the compositions which can be obtained from the process of the invention and (portland) cement, slag sand, fly ash, silica dust, metakaolin, natural pozzuolanas, calcined oil shales and/or calcium aluminate cement, preferably by building material mixtures containing the compositions which can be obtained from the process of the invention, (portland) cement and binders based on calcium sulphate, particularly preferably by building material mixtures which contain the compositions which can be obtained from the process of the invention and contain essentially (portland) cement as binder. The object is also achieved by the use of the solid compositions which can be obtained from the process of the invention as grinding aid in the production of cement.

It has surprisingly been found that, in the process of the invention, carrying out the step a) "mixing of an aqueous suspension containing calcium silicate hydrate which is preferably suitable as setting and curing accelerator for (portland) cement-containing binder systems with at least one water-soluble comb polymer which is suitable as plasticizer for hydraulic binders" enables a very substantial increase in the efficiency as accelerator of the solid compositions obtained after the drying step c). It was particularly surprising that it was important to carry out step a), regardless of whether or not the abovementioned suspension containing calcium silicate hydrate contains, for example according to the teaching of WO 2010026155 A1), a water-soluble comb polymer which is suitable as plasticizer for hydraulic binders.

The comb polymers used in process step a) act as an acid for the drying of suspensions containing calcium silicate hydrate. The drying aid, a comb polymer which is water-soluble and is suitable as plasticizer for hydraulic binders has the purpose of making it possible to produce solid compositions according to the invention which are particularly efficient as accelerators. Carrying out process step a) thus prevents, in particular, a decrease in the accelerator efficiency of the solid compositions which can be obtained from drying step c) and contain calcium silicate hydrate and a water-soluble comb polymer which is suitable as plasticizer for hydraulic binders. This process step or the effect associated therewith is neither described nor suggested in WO 2010026155 A1.

The compositions according to the invention which can be obtained from the process are preferably present in the solid state, particularly preferably in the pulverulent state. The compositions according to the invention which can be obtained from the process are preferably accelerator compositions and are preferably suitable as setting and curing accelerators for (portland) cement-containing binder systems. The proportion of water in the solid composition of the invention should preferably be less than 15% by weight, particularly preferably less than 10% by weight. The abovementioned proportion of water can encompass both free water still present in the solid composition and water bound in the calcium silicate hydrate. The water content of the powders is preferably determined by drying to constant weight at 60°C in a drying oven, with the weight difference found being regarded as the proportion of water.

An inorganic component and an organic component are preferably present. The inorganic component can preferably be considered to be a modified, preferably finely divided calcium silicate hydrate (C-S-H) which can contain foreign ions such as magnesium and aluminium. The composition of the inorganic component calcium silicate hydrate (C-S-H) can in most cases be described by the following formula:
a CaO, SiO₂, b Al₂O₃, c H₂O, d x₂O, e WO
where
X is an alkali metal,
W is an alkaline earth metal, preferably W is an alkaline earth metal which is different from calcium,

| | | |
|---|---|---|
| 0.1 ≤ a ≤ 2 | preferably | 0.66 ≤ a ≤ 1.8 |
| 0 ≤ b ≤ 1 | preferably | 0 ≤ b ≤ 0.1 |
| 1 ≤ c ≤ 6 | preferably | 1 ≤ c ≤ 6.0 |
| 0 ≤ d ≤ 1 | preferably | 0 ≤ d ≤ 0.4 |
| 0 ≤ e ≤ 2 | preferably | 0 ≤ e ≤ 0.1 |

The molar ratios are particularly preferably selected so that they are in the preferred ranges for a, b and e (0.66 ≤ a ≤ 1.8; 0 ≤ b ≤ 0.1; 0 ≤ e ≤ 0.1) in the above formula.

The calcium silicate hydrate is preferably present in the form of foshagite, hillebrandite, xonotlite, nekoite, clinotobermorite, 9Å - tobermorite (riversiderite), 11Å - tobermorite, 14 Å - tobermorite (plombierite), jennite, metajennite, calcium chondrodite, afwillite, α - C₂SH, dellaite, jaffeite, rosenhahnite, killalaite and/or suolunite, particularly preferably as xonotlite, 9Å-tobermorite (riversiderite), 11Å - tobermorite, 14 Å - tobermorite (plombierite), jennite, metajennite, afwillite and/or jaffeite in the compositions which can be obtained from the process. The molar ratio of calcium to silicon in the calcium silicate hydrate is preferably from 0.6 to 2 and particularly preferably from 0.66 to 1.8. The molar ratio of calcium to water in the calcium silicate hydrate is preferably from 0.6 to 6, particularly preferably from 0.6 to 2 and in particular from 0.8 to 2.

The organic component is the plasticizer used in process step a) "mixing of an aqueous suspension containing calcium silicate hydrate which is preferably suitable as setting and curing accelerator for (portland) cement-containing binder systems with at least one water-soluble comb polymer which is suitable as plasticizer for hydraulic binders. These are described in WO 2010026155 A1. The teaching of WO 2010026155 A1 in respect of the water-soluble comb polymers which are suitable as plasticizer for hydraulic binders is incorporated by reference at this point. A water-soluble comb polymer is preferably a polymer whose solubility in water at 20°C is greater than 1 g/l, preferably greater than 10 g/l and in particular greater than 100 g/l.

Comb polymers for the purposes of the present invention are thus polymers which have relatively long side chains (having a molecular weight of in each case at least 200 g/mol, particularly preferably at least 400 g/mol) at more or less regular intervals on a linear main chain. The lengths of these side chains are frequently of approximately equal length, but can also deviate greatly from each other (e.g. when polyether macromonomers having side chains of different lengths are polymerized in). Such polymers can be obtained, for example, by free-radical polymerization of acid monomers and polyether macromonomers. An alternative route to such comb polymers is esterification or amidation of poly(meth)acrylic acid and similar (co)polymers, for example acrylic acid-maleic acid copolymers, by means of suitable monohydroxyfunctional or monoamino-functional polyalkylene glycols, preferably alkylpolyethylene glycols. Comb polymers which can be obtained by esterification and/or amidation of poly(meth)acrylic acid are described, for example, in EP 1138697B1, which is hereby expressly incorporated by reference.

The average molecular weight M_{w} of the comb polymer which is suitable as plasticizer for hydraulic binders as determined by gel permeation chromography (GPC) is preferably from 5000 to 200 000 g/mol, particularly preferably from 10 000 to 80 000 g/mol, and very particularly preferably from 20 000 to 70 000 g/mol. The polymers were analysed by means of size exclusion chromography to determine the average molar mass and conversion (column combinations: OH-Pak SB-G, OH-Pak SB 804 HQ and OH-Pak SB 802.5 HQ from Shodex, Japan; eluent: 80% by volume of an aqueous solution of HCO₂NH₄ (0.05 mol/l) and 20% by volume of acetonitrile; injection volume: 100 µl; flow rate: 0.5 ml/min). The calibration to determine the average molar mass was carried out using linear poly(ethylene oxide) and polyethylene glycol standards. The peak of the copolymer was normalized to a relative height of 1 as a measure of the conversion and the height of the peak of the unreacted macromonomer/PEG-containing oligomer was used as a measure of the residual monomer content.

The water-soluble comb polymer which is suitable as plasticizer for hydraulic binders preferably meets the requirements of industrial standard EN 934-2 (February 2002).

Mixing of a preparation A with a preparation B preferably occurs in process step a). Preparation A is a suitable calcium silicate hydrate suspension, and preparation B is the water-soluble comb polymer which is suitable as plasticizer for hydraulic binders. The comb polymer can be used in dry form or in aqueous solution. Preference is given to using a previously prepared calcium silicate hydrate suspension in the process. Any in-situ production of the calcium silicate hydrate suspension during the mixing operation or after mixing with the comb polymer is therefore preferably ruled out. The mixture can be produced by conventional mixing processes.

Suspensions containing calcium silicate hydrate which are suitable as setting and curing accelerators for (portland) cement-containing binder systems are preferably the (process) products mentioned in the following text under 1.) to 5.). It is also possible to use a mixture of the (process) products 1.) to 5.) mentioned. The aqueous suspension containing calcium silicate hydrate of process step a) can thus, for example, be produced beforehand and then be used as starting material (preparation A):
1.) Aqueous curing accelerator compositions which have been obtained according to the teaching of WO 2010026155 A1 by a process for producing an aqueous curing accelerator composition by reaction of a water-soluble calcium compound with a water-soluble silicate compound in the presence of an aqueous solution containing a water-soluble comb polymer which is suitable as plasticizer for hydraulic binders, or obtained according to corresponding dependent process claims; the teaching of WO 2010026155 A1 in respect of the aqueous curing accelerator compositions which can be obtained from the process of WO 2010026155 A1 is incorporated by reference at this point. The compositions are preferably suspensions.
2.) Aqueous curing accelerator compositions which have been obtained according to the teaching of WO 2010026155 A1 by a process for producing an aqueous curing accelerator composition by reaction of a calcium compound, preferably a calcium salt, very particularly preferably a water-soluble calcium salt, with a silicon dioxide-containing component under alkaline conditions, characterized in that the reaction is carried out in the presence of an aqueous solution of a water-soluble comb polymer which is suitable as plasticizer for hydraulic binders, or obtained according to corresponding dependent process claims; the teaching of WO 2010026155 A1 in respect of the aqueous curing accelerator compositions which can be obtained from the process of WO 2010026155 A1 is incorporated by reference at this point. The compositions are preferably suspensions.
3.) Aqueous compositions which can be produced according to the teaching of a patent application filed on the same day as the present patent application at the European Patent Office. The application number is EP 11 163 423.4. These aqueous compositions contain, in particular, calcium silicate hydrate and at least one (co)polymer having carboxylic acid groups and/or carboxylate groups and sulphonic acid groups and/or sulphonate groups, wherein the molar ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1, or compositions according to corresponding dependent claims. The compositions are preferably suspensions. The aqueous compositions or preferably suspensions can, in one process, be produced by reaction of a water-soluble calcium compound with a water-soluble silicate compound in the presence of an aqueous solution containing at least one (co)polymer having carboxylic acid groups and/or carboxylate groups and sulphonic acid groups and/or sulphonate groups, wherein the ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1. The aqueous compositions or preferably suspensions can also be produced in a process by reaction of a calcium compound, preferably a calcium salt and in particular a water-soluble calcium salt, with a silicon dioxide-containing compound under alkaline conditions, characterized in that the reaction takes place in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups is from 1/20 to 20/1, preferably from 1/5 to 5/1, particularly preferably from 1/2 to 2/1. The abovementioned (co)polymers which can be prepared according to the teaching of the patent application having the application number EP 11 163 423.4 are preferably produced by free-radical (co)polymerization of monoethylenically unsaturated polymers having a carbon-carbon double bond. Particular preference is given to using carboxylic acid monomers, in particular monocarboxylic acid monomers, and monomers containing sulphonic acid groups in the preparation of the (co)polymers according to the invention. The term carboxylic acid monomer likewise encompasses the monomers present in salt form as carboxylate (carboxylate monomers) and the term monomers containing sulphonic acid groups correspondingly encompasses the monomers present in salt form as sulphonate (sulphonate monomers). These can also be present in mixed form.
   Examples of appropriate carboxylic acid monomers are (meth)acrylic acid, ethacrylic acid, α-chloroacrylic acid, α-cyanoacrylic acid, β-methacrylic acid (crotonic acid), α-phenylacrylic acid, β-acryloxypropionoic acid, sorbic acid, α-chlorosorbic acid, 2'-methylisocrotonic acid, cinnamic acid, p-chlorocinnamic acid, β-stearyl acid, itaconic acid, citraconic acid, mesacronic acid, glutaconic acid, aconitic acid, maleic acid, fumaric acid and/or tricarboxyethylene, with particular preference being given to (meth)acrylic acid, in particular acrylic acid. Preference is given to monocarboxylic acids. It is possible to use one or more carboxylic acid monomers. Maleic acid, in particular when used in relatively high proportions, is less well suited since, owing to the relatively high affinity for calcium ions (a-carboxyl groups), a retarding influence on the setting behaviour is observed. The proportion of carboxylic acid groups from maleic acid should therefore be less than 20 mol% of all carboxylic acid groups in the copolymer, preferably less than 10 mol%; in particular, no maleic acid should be used.
   Examples of appropriate sulphonic acid monomers are one or more of the monomer species (meth)allylsulphonic acid, vinylsulphonic acid, stryenesulphonic acid, 2-acryl-amido-2-methylpropanesulphonic acid, 2-methacrylamido-2-methylpropanesulphonic acid, 2-acrylamidobutanesulphonic acid and 2-acrylamido-2,4,4-trimethylpentanesulphonic acid or in each case the salts of the acid mentioned. Particular preference is given to 2-acrylamido-2-methylpropanesulphonic acid (AMPS) and salt compounds thereof. The cations belonging to the salt compounds of the acids are not subject to any particular restrictions and can in each case preferably be present as monovalent or divalent metal cations such as sodium, potassium, calcium or magnesium ions or as ammonium ions derived from ammonia, primary, secondary or tertiary C₁-C₂₀-alkylamines, C₁-C₂₀-alkanolamines, C₅-C₈-cycloalkylamines and C₆-C₁₄-arylamines. The alkyl radicals can in each case be branched or unbranched. Examples of such amines are methylamine, dimethylamine, trimethylamine, ethanolamine, diethanolamine, triethanolamine, cyclohexylamine, dicyclohexylamine, phenylamine and diphenylamine. Preferred cations are alkali metal ions and/or ammonium ions, with particular preference being given to the sodium ion. The (co)polymer can preferably be obtained from a free-radical (co)polymerization and the carboxylic acid groups and/or carboxylate groups are derived from monocarboxylic acid monomers. Particular preference is given to (meth)acrylic acid, in particular acrylic acid. Preference is given to the (co)polymer being able to be obtained from a free-radical (co)polymerization and the carboxylic acid groups and/or carboxylate groups being derived from the monomers acrylic acid and/or methacrylic acid, preferably acrylic acid, and the sulphonic acid groups and/or sulphonate groups being derived from 2-acrylamido-2-methylpropanesulphonic acid. The weight average molecular weight M_{w} of the (co)polymer(s) is preferably from 8000 g/mol to 200 000 g/mol, preferably from 10 000 to 50 000 g/mol. The average molecular weight M_{w} is in each case determined by means of size exclusion chromatography to determine the average molar mass and conversion (column combinations: OH-Pak SB-G, OH-Pak SB 804 HQ and OH-Pak SB 802.5 HQ from Shodex, Japan; eluent: 80% by volume of an aqueous solution of HCO₂NH₄ (0.05 mol/l) and 20% by volume of acetonitrile; injection volume: 100 µl; flow rate: 0.5 ml/min). The calibration to determine the average molar mass was carried out using linear poly(ethylene oxide) and polyethylene glycol standards.
4.) Aqueous curing accelerator compositions which have been obtained according to the teaching of WO 2011/026720 by means of a process for producing an aqueous curing accelerator composition by reaction of a water-soluble calcium compound with a water-soluble silicate compound in the presence of an aqueous solution of a polycondensate containing
   (I) at least one structural unit made up of an aromatic or heteroaromatic unit which has a polyether side chain and
   (II) at least one structural unit made up of an aromatic or heteroaromatic unit which has at least one phosphoric ester group and/or a salt thereof.
5.) Aqueous curing accelerator compositions which have been obtained according to the teaching of WO 2011/026720 by means of a process for producing an aqueous curing accelerator composition by reaction of a calcium component with a silicon dioxide-containing component under alkaline conditions in the presence of an aqueous solution of a polycondensate containing
   (I) at least one structural unit made up of an aromatic or heteroaromatic unit which has a polyether side chain and
   (II) at least one structural unit made up of an aromatic or heteroaromatic unit which has at least one phosphoric ester group and/or a salt thereof.

The reactants A (Preparation A) identified under 1.) to 3.) may preferably, in addition to the features identified at each of 1.) to 3.), comprise further polymers which comprise at least one polyether side chain and at least one phosphoric ester group and/or the salt residue thereof. The polyether side chain is preferably a polyalkylene glycol, particularly preferably a polyethylene glycol.

The further polymers are preferably polycondensation products which comprise
(I) at least one structural unit consisting of an aromatic or heteroaromatic radical containing a polyether side chain, preferably a polyalkylene glycol side chain, particularly preferably a polyethylene glycol side chain, and
(II) at least one structural unit consisting of an aromatic or heteroaromatic radical containing at least one phosphoric ester group and/or the salt thereof.

Particularly preferably the structural units (I) and (II) are defined by the following general formulae, 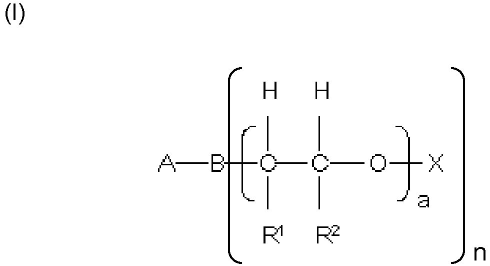
where
   A is identical or different and is represented by a substituted or unsubstituted aromatic or heteroaromatic compound having 5 to 10 C atoms
where
   B is identical or different and is represented by N, NH or O
where
   n is 2, if B is N, and n is 1 if B is NH or O
where
   R¹ and R² independently of one another are identical or different and are also represented by a branched or unbranched C₁ to C₁₀ alkyl radical, C₅ to C₈ cycloalkyl radical, aryl radical, heteroaryl radical or H
where
   a is identical or different and is represented by an integer from 1 to 300
where
   X is identical or different and is represented by a branched or unbranched C₁ to C₁₀ alkyl radical, C₅ to C₈ cycloalkyl radical, aryl radical, heteroaryl radical or H, preferably H, 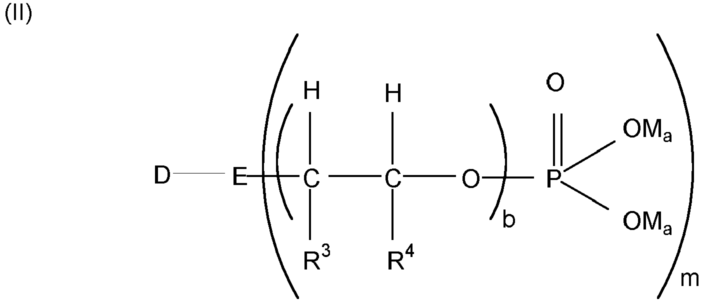
where
   D is identical or different and is represented by a substituted or unsubstituted heteroaromatic compound having 5 to 10 C atoms
where
   E is identical or different and is represented by N, NH or O
where
   m is 2, if E is N, and m is 1, if E is NH or O
where
   R³ and R⁴ independently of one another are identical or different and are represented by a branched or unbranched C₁ to C₁₀ alkyl radical, C₅ to C₈ cycloalkyl radical, aryl radical, heteroaryl radical or H
where
   b is identical or different and is represented by an integer from 1 to 300
where
   M independently at each occurrence is an alkali metal ion, alkaline earth metal ion, ammonium ion, organic ammonium ion and/or H, a is 1 or in the case of alkaline earth metal ions is 1/2.

The groups A and D in the general formulae (I) and (II) of the polycondensation product are represented preferably by phenyl, 2-hydroxyphenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxynaphthyl, 4-methoxynaphthyl, preferably phenyl, and A and D may be selected independently of one another and may also each consist of a mixture of the stated compounds. The groups B and E are represented independently of one another preferably by O. The radicals R¹, R², R³ and R⁴ may be selected independently of one another and are represented preferably by H, methyl, ethyl or phenyl, particularly preferably by H or methyl and especially preferably by H.

In the general formula (I), a is represented preferably by an integer from 1 to 300, especially 3 to 200 and particularly preferably 5 to 150, and b in the general formula (II) is represented by an integer from 1 to 300, preferably 1 to 50 and particularly preferably 1 to 10. The respective radicals, whose length is defined by a or b, respectively, may consist in this case of uniform structural groups, although it may also be appropriate for them to comprise a mixture of different structural groups. In addition, the radicals of the general formulae (I) or (II) may independently of one another each possess the same chain length, with a and b each represented by one number. In this case it will generally be appropriate for mixtures with different chain lengths to be present in each case, and so the radicals of the structural units in the polycondensation product have different numerical values for a and, independently, for b.

The phosphatized polycondensation product frequently has a weight-average molecular weight of 5 000 g/mol to 200 000 g/mol, preferably 10 000 to 100 000 g/mol and particularly preferably 15 000 to 55 000 g/mol.

The phosphatized polycondensation product may also be present in the form of its salts, such as, for example, the sodium, potassium, organic ammonium, ammonium and/or calcium salt, preferably as sodium and/or calcium salt.

The molar ratio of the structural units (I):(II) is typically 1:10 to 10:1 and preferably 1:8 to 1:1.

In one preferred embodiment of the invention, the polycondensation product comprises in the reactants A (Preparation A) a further structural unit (III) which is represented by the following formula: 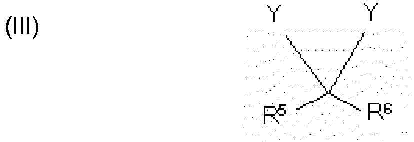
where
   Y independently at each occurrence is identical or different and is represented by (I), (II) or other constituents of the polycondensation product
where
   R⁵ is identical or different and is represented by H, CH₃, COOH or a substituted or unsubstituted aromatic or heteroaromatic compound having 5 to 10 C atoms, preferably H
where
   R⁶ is identical or different and is represented by H, CH₃, COOH or substituted or unsubstituted aromatic or heteroaromatic compound having 5 to 10 C atoms, preferably H.

Typically, R⁵ and R⁶ in structural unit (III) are independently of one another identical or different and are represented by H, COOH and/or methyl. H is especially preferred.

In another embodiment, the molar ratio of the structural units [(I) + (II)]:(III) in the polycondensate is 1:0.8 to 3.

Further information on the phosphatized polycondensation products and their preparation can be found in the disclosure content of WO 2011/026720.

Preference is given to compositions comprising calcium silicate hydrate where the calcium silicate hydrate does not originate from a hydration reaction of (portland) cement with water, and at least one (co)polymer which contains carboxylic acid groups and/or carboxylate groups and sulphonic acid groups and/or sulphonate groups, the molar ratio of the number of carboxylic acid groups and/or carboxylate groups to the sulphonic acid groups and/or sulphonate groups being from 1/20 to 20/1.

Preference is given to compositions comprising calcium silicate hydrate and at least one (co)polymer which contains carboxylic acid groups and/or carboxylate groups and sulphonic acid groups and/or sulphonate groups, the molar ratio of the number of carboxylic acid groups and/or carboxylate groups to the sulphonic acid groups and/or sulphonate groups being from 1/20 to 20/1, the composition comprising no (portland) cement. Particularly preferred are compositions comprising calcium silicate hydrate and at least one (co)polymer which contains carboxylic acid groups and/or carboxylate groups and sulphonic acid groups and/or sulphonate groups, the molar ratio of the number of carboxylic acid groups and/or carboxylate groups to the sulphonic acid groups and/or sulphonate groups being from 1/20 to 20/1, the composition comprising no (portland) cement which has come into contact with water. By (portland) cement which has come into contact with water is meant, additionally, mixtures of (portland) cement and water which have undergone interim drying, and which may contain a preferably small proportion of water.

The solid compositions which can be obtained from the process preferably contain salts, particularly preferably water-soluble salts having a solubility in water at 20°C of greater than 1 g/l. Preferred salts in terms of the anionic component are sulphates, nitrates, halides, thiocyanates [CH1], formates and/or acetates. As regards the cationic component, preference is given to alkali metals, in particular sodium and/or potassium. Examples of particularly preferred salts are sodium nitrate, sodium acetate, sodium formate and sodium sulphate.

The process of the invention is preferably carried out in the absence of binders, preferably in the absence of hydraulic binders, particularly preferably in the absence of (portland) cement. The process products accordingly preferably do not contain any binders, especially preferably no (portland) cement. Preference is given to the solid process products of the invention where the calcium silicate hydrate does not originate from a hydration reaction of (portland) cement with water. Particular preference is given to the solid compositions of the invention which comprise no (portland) cement which has come into contact with water.

In process step b), a suitable solids content is considered to be preferably 5-50% by weight, particularly preferably from 15 to 25% by weight. This is the range which generally allows a person skilled in the art to set a suitable viscosity of the spray feed. Apart from water, it is also possible to use other solvents which do not cause any problems during spray drying and are suitable for setting an appropriate viscosity.

The drying step c) is preferably carried out at low temperatures, in particular at low temperatures and reduced pressure. The drying temperature selected should preferably be less than 150°C, preferably less than 100°C, in particular less than 80°C and most preferably in the range from 15°C to 80°C, in order to avoid dehydration of the calcium silicate hydrate particles. A convention drying oven, vacuum drying oven or fluidized-bed dryer is suitable for drying. A preferred drying method is the spray drying process since relatively high drying rates can be achieved.

Preferred embodiments of the process of the invention are specified in the dependent claims and are described in the following.

Preference is given to a process, characterized in that the solid composition which can be obtained from the process has a weight ratio of the (co)polymer or (co)polymers to the calcium silicate hydrate of from from 1/10 to 50/1, particularly preferably from 1/5 to 20/1. The comb polymer which is suitable as plasticizer for hydraulic binders originates from process step a), i.e. has been added to the calcium silicate hydrate suspension in this step. Any comb polymers which are present in the calcium silicate hydrate suspension used as starting material (for example according to the teaching of WO 2010026155 A1) are not taken into account in the abovementioned ratios. Any comb polymers present in the calcium silicate hydrate suspension used as starting material display barely any stabilizing effect on the accelerator compositions during the drying operation.

Preference is given to a process, characterized in that the aqueous suspension containing calcium silicate hydrate used in process step a) has been obtained either by reaction of a water-soluble calcium compound whose solubility in water at 20°C is preferably more than 0.5 g/l, particularly preferably more than 1.5 g/l, in particular more than 10 g/l, with a water-soluble silicate compound whose solubility in water at 20°C is preferably more than 0.01 g/l, particularly preferably more than 1 g/l, in particular more than 10 g/l, where the reaction of the water-soluble calcium compound with the water-soluble silicate compound is carried out in the presence of an aqueous solution containing a water-soluble comb polymer which is suitable as plasticizer for hydraulic binders, or characterized in that the aqueous suspension of calcium silicate hydrate used in process step a) has been obtained by reaction of a calcium compound, preferably a calcium salt and in particular a water-soluble calcium salt, with a silicon dioxide-containing compound under alkaline conditions in the presence of an aqueous solution containing a water-soluble comb polymer which is suitable as plasticizer for hydraulic binders. These processes are disclosed in WO 2010026155 A1.

Preference is given to a process, characterized in that the aqueous suspension containing calcium silicate hydrate used in process step a) has either been obtained by reaction of a water-soluble calcium compound whose solubility in water at 20°C is preferably more than 0.5 g/l, particularly preferably more than 1.5 g/l, in particular more than 10 g/l, with a water-soluble silicate compound whose solubility in water at 20°C is preferably more than 0.01 g/l, particularly preferably more than 1 g/l, in particular more than 10 g/l, where the reaction of the water-soluble calcium compound with the water-soluble silicate compound is carried out in the presence of an aqueous solution of a (co)polymer having carboxylic acid groups and/or carboxylate groups and sulphonic acid groups and/or sulphonate groups, where the molar ratio of the number of carboxylic acid groups and carboxylate groups to the sulphonic acid groups and/or sulphonate groups in the (co)polymer is from 1/20 to 20/1, or the aqueous suspension of calcium silicate hydrate used in process step a) has been obtained by reaction of a calcium compound, preferably a calcium salt and in particular a water-soluble calcium salt, whose solubility in water at 20°C is preferably more than 1.5 g/l, particularly preferably more than 10 g/l at 20°C, with a silicon dioxide-containing compound under alkaline conditions in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups in the (co)polymer is from 1/20 to 20/1.

Preference is given to a process, characterized in that the water-soluble comb polymer which is suitable as plasticizer for hydraulic binders and is used in process step a) is present as a copolymer which contains ether functions, preferably in the form of polyalkylene glycols of the general formula (AO)ₙ, where the radicals A are each, independently of one another, an alkylene radical having from 2 to 4 carbon atoms, O is oxygen and n is an integer from 2 to 350, preferably from 10 to 200, in particular from 50 to 150, and also contains side chains having acid functions, in particular carboxyl groups and/or carboxylate groups, on the main chain.

Preference is given to a process, characterized in that the water-soluble comb polymer which is suitable as plasticizer for hydraulic binders which is used is present as a copolymer which has been produced by free-radical polymerization in the presence of acid monomers and polyether macromonomers, so that a total of at least 45 mol%, preferably at least 80 mol%, of all structural units of the copolymer have been produced by copolymerization of acid monomers, preferably monomers containing carboxyl groups and/or carboxylate groups, and polyether macromonomers. As acid monomers, preference is given to (meth)acrylic acid and/or maleic acid, in particular acrylic acid.

Preference is given to a process, characterized in that the free-radical copolymerization has produced a copolymer having a structural unit which can be obtained by copolymerization of the acid monomer and corresponds to one of the general formulae (Ia), (Ib), (Ic) and/or (Id): 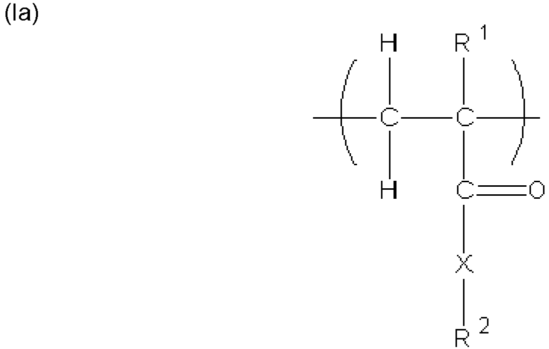
where
   the radicals R¹ are identical or different and are each H and/or an unbranched or branched C₁ - C₄ alkyl group;
the radicals X are identical or different and are each NH-(CₙH₂ₙ) where n = 1, 2, 3 or 4 or O-(CₙH₂ₙ) where n = 1, 2, 3 or 4 or an absent unit;
the radicals R² are identical or different and are each OH, SO₃H, PO₃H₂, O-PO₃H₂ or para-substituted C₆H₄-SO₃H, with the proviso that if X is an absent unit, R² is OH; 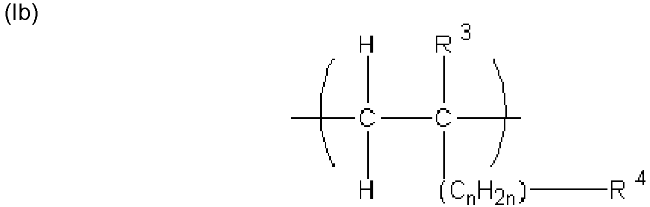
where
   the radicals R³ are identical or different and are each H or an unbranched or branched C₁ - C₄ alkyl group;
n = 0, 1, 2, 3 or 4;
the radicals R⁴ are identical or different and are each SO₃H, PO₃H₂, O-PO₃H₂ or para-substituted C₆H₄-SO₃H; 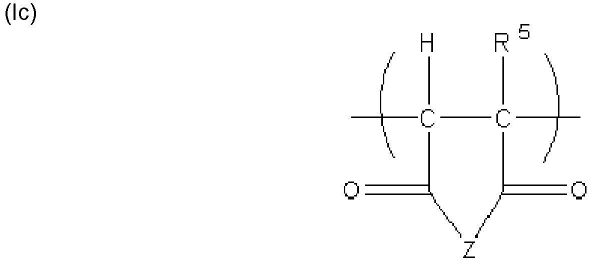
where
   the radicals R⁵ are identical or different and are each H or an unbranched or branched C₁ - C₄ alkyl group;
the radicals Z are identical or different and are each O or NH; 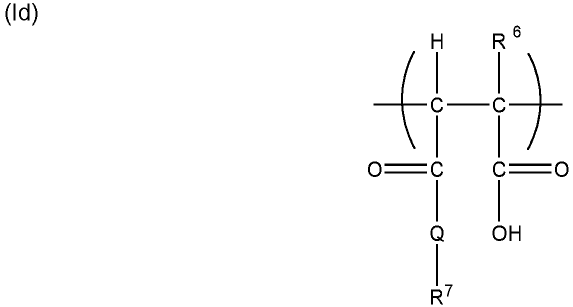
where
   the radicals R⁶ are identical or different and are each H or an unbranched or branched C₁ - C₄ alkyl group;
the radicals Q are identical or different and are each NH or O;
the radicals R⁷ are identical or different and are each H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄)-OPO₃H₂ or (CₘH₂ₘ)ₑ-O-(A'O)_{α}-R⁹ where m = 0, 1, 2, 3 or 4, e = 0, 1, 2, 3 or 4, A' = C_{x'}H_{2x'} where x' = 2, 3, 4 or 5 or CH₂C(C₆H₅)H-, α = an integer from 1 to 350 and the radicals R⁹ are identical or different and are each an unbranched or branched C₁ - C₄ alkyl group.

Preference is given to a process, characterized in that the free-radical copolymerization has produced a copolymer containing a structural unit which can be obtained by copolymerization of the polyether macromonomer and corresponds to one of general formula (IIa), (IIb), (IIc) and/or (IId): 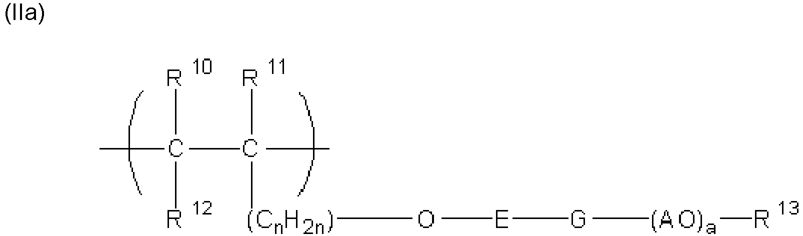
where
   R¹⁰, R¹¹ and R¹² are identical or different and are each, independently of one another, H or an unbranched or branched C₁ - C₄ alkyl group;
the radicals E are identical or different and are each an unbranched or branched C₁ - C₆ alkylene group, a cyclohexyl group, CH₂-C₆H₁₀, ortho-, meta- or para-substituted C₆H₄ or an absent unit;
the radicals G are identical or different and are each O, NH or CO-NH, with the proviso that if E is an absent unit, G is also an absent unit;
the radicals A are identical or different and are each CₓH₂ₓ where x = 2, 3, 4 or 5 (preferably x = 2) or CH₂CH(C₆H₅);
the indices n are identical or different and are each 0, 1, 2, 3, 4 or 5;
the indices a are identical or different and are each an integer from 2 to 350 (preferably 10 - 200);
the radicals R¹³ are identical or different and are each H, an unbranched or branched C₁ - C₄ alkyl group, CO-NH₂ or COCH₃; 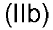 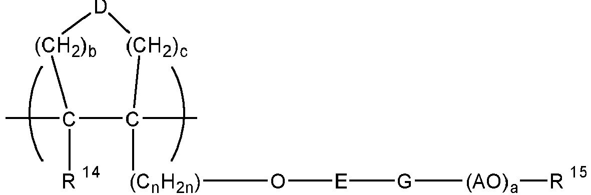
where
   the radicals R¹⁴ are identical or different and are each H or an unbranched or branched C₁ - C₄ alkyl group;
the radicals E are identical or different and are each an unbranched or branched C₁ - C₆ alkylene group, a cyclohexyl group, CH₂-C₆H₁₀, ortho-, meta- or para-substituted C₆H₄ or an absent unit;
the radicals G are identical or different and are each an absent unit, O, NH or CO-NH, with the proviso that if E is an absent unit, G is also an absent unit;
the radicals A are identical or different and are each CₓH₂ₓ where x = 2, 3, 4 or 5 or CH₂CH(C₆H₅);
the indices n are identical or different and are each 0, 1, 2, 3, 4 or 5;
the indices a are identical or different and are each an integer from 2 to 350;
the radicals D are identical or different and are each an absent unit, NH or O, with the proviso that if D is an absent unit: b = 0, 1, 2, 3 or 4 and c = 0, 1, 2, 3 or 4, where b + c = 3 or 4, and with the proviso that when D is NH or O: b = 0, 1, 2 or 3, c = 0, 1, 2 or 3, where b + c = 2 or 3;
the radicals R¹⁵ are identical or different and are each H, an unbranched or branched C₁ - C₄ alkyl group, CO-NH₂ or COCH₃; 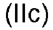 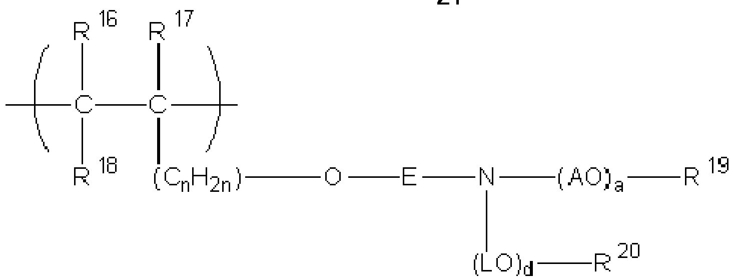
where
   R¹⁶, R¹⁷ and R¹⁸ are identical or different and are each, independently of one another, H or an unbranched or branched C₁ - C₄ alkyl group;
the radicals E are identical or different and are each an unbranched or branched C₁ - C₆ alkylene group, a cyclohexyl group, CH₂-C₆H₁₀, ortho-, meta- or para-substituted C₆H₄ or an absent unit;
the radicals A are identical or different and are each CₓH₂ₓ where x = 2, 3, 4 or 5 CH₂-CH(C₆H₅);
the indices n are identical or different and are each 0, 1, 2, 3, 4 or 5;
the radicals L are identical or different and are each CₓH₂ₓ where x = 2, 3, 4 or 5 or CH₂-CH(C₆H₅);
the indices a are identical or different and are each an integer from 2 to 350;
the indices d are identical or different and are each an integer from 1 to 350;
the radicals R¹⁹ are identical or different and are each H and/or an unbranched or branched C₁ - C₄ alkyl group,
the radicals R²⁰ are identical or different and are each H or an unbranched C₁ - C₄ alkyl group; 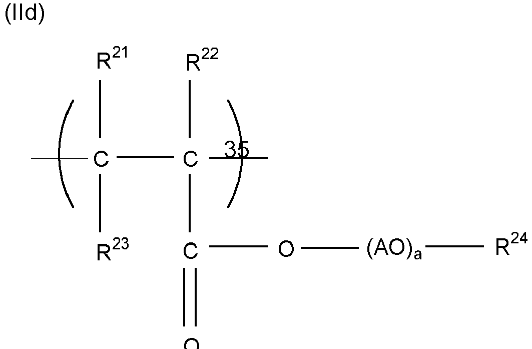
where
   R²¹, R²² and R²³ are identical or different and are each, independently of one another, H or an unbranched or branched C₁ - C₄ alkyl group;
the radicals A are identical or different and are each CₓH₂ₓ where x = 2, 3, 4 or 5 or CH₂CH(C₆H₅);
the indices a are identical or different and are each an integer from 2 to 350;
the radicals R²⁴ are identical or different and are each H or an unbranched or branched C₁ - C₄ alkyl radical.

Provided in accordance with the invention is a process, characterized in that the water-soluble comb polymer which is suitable as plasticizer for hydraulic binders and is used in process step a) has an average ratio of the number of moles of carboxyl and/or carboxylate groups to the total molar mass of the comb polymer of from 1/300 to 1/700 mol/(g/mol), particularly preferably from 1/300 to 1/400 mol/(g/mol). Cations, including protons, associated with the comb polymer are preferably not taken into account in calculating the total molar mass of the comb polymer. The calculation of the total molar mass in the case of, for example, copolymerized acrylic acid structural units or other carboxylic acid units which have been neutralized with, for example, sodium hydroxide, thus does not take into account the cation Na⁺. Should no neutralization be carried out, the cations ("H⁺") located on the carboxylic acid groups would likewise not be taken into account.

The abovementioned parameter is a measure of the charge density in the comb polymer or polymers. It has been found that the range specified in the dependent claim makes it possible to achieve particularly good results. A relatively high average ratio of the number of moles of carboxyl and/or carboxylate groups to the total molar mass of the comb polymer gives particularly good results in respect of the accelerating effect of the dried compositions. This can also be seen from the examples; in particular, KP2 and KP3 gave particularly good results (Tables 2, 3 and in particular Table 4). These values are even comparable in terms of effectiveness with the (undried) reference suspension X-Seed®100. However, to achieve a good action as (spray) drying aid, the charge density must not be too high since otherwise a retarding effect (for example in the case of the reference polyacrylic acid) occurs. The formulation "carboxyl and/or carboxylate groups" means, for the purposes of the present patent application, that if both species are present, the sum of the two species is to be formed. The possibility of selecting carboxyl groups or carboxylate groups in the presence of both species is preferably not intended. Carboxyl and/or carboxylate groups are to be considered as largely equivalent and of equal effect.

The average ratio of the number of moles of carboxyl and/or carboxylate groups to the total molar mass of the comb polymer is also preferably defined as the ratio of the total number of moles of all carboxyl and/or carboxylate groups in the comb polymers (mol) to the total molar mass of the comb polymer (g/mol). Taking into account the number of moles of all charges, preferably all carboxyl and/or carboxylate groups, and the total molar mass in the comb polymers gives an average value.

Preference is given to a process, characterized in that the drying process c) is spray drying.

The invention also provides compositions which can be obtained by the process of the invention or by one of the preferred embodiments of the process.

The compositions which can be obtained by the process of the invention or by one of the preferred embodiments of the process can be used as curing accelerators in building material mixtures containing (portland) cement, slag sand, fly ash, silica dust, metakaolin, natural pozzolanas, calcined oil shales and/or calcium aluminate cement, preferably the compositions which can be obtained by the process of the invention can be used as curing accelerators in building material mixtures containing (portland) cement and binders based on calcium sulphate, particularly preferably the compositions which can be obtained by the process of the invention can be used as curing accelerators in building material mixtures containing essentially (portland) cement as binder.

The compositions obtainable from the process of the invention can be used as grinding aids in the production of cement, preferably in the grinding of the clinker or clinker blend to form the cement. By clinker blend is meant preferably a mixture of clinker and substitutes such as slag, fly ash and/or pozzuolanas. In this case the process products of the invention are used in amounts of from 0.001 % by weight to 5% by weight, preferably in amounts of from 0.01% by weight 0.5% by weight, based in each case on the clinker or clinker blend to be ground. It is possible to use the process products of the invention as grinding aids in ball mills or else in vertical mills. The process products of the invention can be used as grinding aids alone or else in combination with other grinding aids, such as, for example, mono-, di-, tri- and polyglycols, polyalcohols (for example glycerol in various degrees of purity, for example from the production of biodiesel), amino alcohols (e.g. MEA, DEA, TEA, TIPA, THEED, DIHEIPA), organic acids and/or salts thereof (e.g. acetic acid and/or salts thereof, formates, gluconates), amino acids, sugars, and residues from sugar production (e.g. molasses, vinasse), inorganic salts (chlorides, fluorides, nitrates, sulphates) and/or organic polymers (e.g. polyether carboxylates (PCEs)). It has emerged that the early strengths, in particular, of the cement thus produced can be improved.

The compositions obtainable from the process of the invention can be used in a process for preparing a sprayable composition which comprises hydraulic binder and which comprises, as essential components, water, aggregates, hydraulic binder and accelerator, and is characterized in that the calcium silicate hydrate-comprising composition obtainable from the process of the invention is added before and/or at the spraying nozzle. The process for preparing a hydraulically setting, sprayable hydraulic binder composition are described in international application PCT/EP2010/062671. The corresponding accelerators of this patent application, based on calcium silicate hydrate, can be used in an analogous way in the processes of PCT/EP2010/062671.

The building material mixtures in which the compositions obtainable from the process of the invention are used as curing accelerators preferably contain (portland) cement and at least one further component selected from the group consisting of slag sand, fly ash, silica dust, metakaolin, natural pozzuolanas, calcined oil shales and/or calcium aluminate cement. The proportion by mass of (portland) cement based on the total mass of the binder is particularly preferably at least 5%, particularly preferably at least 20%, in particular at least 40%.

The building material mixtures containing 1.) (portland) cement and 2.) binders based on calcium sulphate are not subject to any particular restrictions in terms of the mass ratios of 1.) and 2.). Preference is given to a ratio of 1.) to 2.) in the range from 9/1 to 1/9, preferably from 4/1 to 1/4.

The formulation "containing essentially (portland) cement as binder" preferably means that the proportion of (portland) cement is at least 40% by weight based on the total mass of all binders, particularly preferably at least 80% by weight; in particular, the (portland) cement represents 100% of the binder.

The solid compositions obtainable from the process of the invention are preferably used in dry mortar mixtures, in particular in powder form. The solid compositions according to the invention are preferably added in amounts, based on the binder or binders, in particular based on (portland) cement, of from 0.1 to 5% by weight, preferably from 0.1 to 2% by weight, or are present in the building material mixtures in the weight ratios indicated.

For illustration, the term building material mixtures can refer to mixtures in dry or aqueous form and in the cured or plastic state. Dry building material mixtures are preferred. Dry building material mixtures can be, for example, mixtures of the abovementioned binders, preferably (portland) cement, and the curing accelerator compositions of the invention (preferably in powder form). Mixtures in aqueous form, generally in the form of slurries, pastes, fresh mortar or fresh concrete, are produced by addition of water to the binder component or to the binder components and the curing accelerator composition; they then go over from the plastic state to the cured state.

Binders based on calcium sulphate are preferably gypsum, α-hemihydrate, β-hemihydrate, bassanite and/or anhydrite.

The building material mixtures can contain, as other additives, for example antifoams, air pore formers, fillers, redispersible polymer powders, retarders, thickeners, water retention agents and/or wetting agents.

### Examples

### Polymerization of the spray aid (polycarboxylate ether (PCE)):

### General method, in particular method for producing KP1 to KP8:

875 g of a 40% strength aqueous solution of polyethylene glycol hydroxybutyl monovinyl ether and NaOH (20%) are placed in a 1 litre four-neck flask provided with thermometer, reflux condenser and a connection for two feed streams. Details of the molar masses of the respective polyethylene glycol hydroxybutyl monovinyl ethers may be found in Table 2. The solution is then cooled to 20°C. Acrylic acid (99%) is then slowly added to the polyethylene glycol hydroxybutyl monovinyl ether solution in the flask. The pH decreases to about 4-5. 0.5 g of iron(II) sulphate heptahydrate and 5 g of Rongalit and mercaptoethanol are then added thereto. After brief stirring, 3 g of 50% hydrogen peroxide are then introduced. This results in the temperature rising from 20°C to about 30°C - 65°C. The solution is subsequently stirred for 10 minutes before being neutralized with sodium hydroxide solution (20%). This gives a light-yellow, clear aqueous polymer solution having a solids content of about 40% by weight. All variable amounts indicated for the chemicals used in the preparation of the polycarboxylate ethers KP1 to KP8 (NaOH, mercaptoethanol and acrylic acid) and the molar masses of the respective polyethylene glycol hydroxybutyl monovinyl ether are shown in Tables 1 and 2 below.

**Table 1: Details of the preparation of PCE**

| | NaOH (20%) [g] | Mercaptoethanol [g] | Acrylic acid (99%) [g] |
|---|---|---|---|
| KP 1 | 30 | 5 | 152 |
| KP 2 | 20 | 2.7 | 84.9 |
| KP 3 | 20 | 2.8 | 87 |
| KP 4 | 10 | 2 | 69.5 |
| KP 5 | 10 | 1.7 | 42.4 |
| KP 6 | 0 | 1.5 | 24.1 |
| KP 7 | 0 | 1.4 | 21 |
| KP 8 | 0 | 1 | 17 |

Table 2 gives an overview of the structural parameters of the polycarboxylate ethers used as spraying aid.

**Table 2: Overview of the structural parameters of the PCEs**

| Additive (PCE) | Charge density (number of moles of carboxylate and/or carboxyl groups/total molar mass of the PCE) (mol/(g/mol)) | Weight average molecular weight M_{w} (g/mol) | Molar mass of the polyethylene glycol hydroxybutyl monovinyl ether used (g/mol) |
|---|---|---|---|
| KP 1 | 1/239 | 20,571 | 500 |
| KP 2 | 1/372 | 23239 | 3000 |
| KP 3 | 1/365 | 40105 | 5800 |
| KP 4 | 1/438 | 25412 | 1100 |
| KP 5 | 1/672 | 28659 | 3000 |
| KP 6 | 1/1128 | 47424 | 5800 |
| KP 7 | 1/1284 | 27076 | 3000 |
| KP 8 | 1/1569 | 48806 | 3000 |
| KP9: MVA®2500 | 1/1344 | 27365 | 5800 |

### As comparative example, a polyacrylic acid was prepared by the following method:

A 5% strength Wako V50 azo initiator solution (corresponds to 0.2 mol% of azo initiator) is placed in a 1 litre four-necked flask provided with thermometer, pH meter and reflux condenser. This mixture is heated to 75°C under a blanket of nitrogen. After 75°C has been reached, a 40% strength acrylic acid solution and 1 mol% of 2-mercaptoethanol are metered in over a period of 40 minutes. The temperature is maintained at about 80°C by cooling. After the addition is complete, the mixture is stirred at 80°C for another one hour. This gives a slightly yellowish, clear aqueous polymer solution having a solids content of about 40% by weight and a pH of about 3.

The weight average molecular weight M_{w} of the polyacrylic acid was 18 350 g/mol. It was analysed by means of size exclusion chromatography to determine the average molar mass and conversion (column combinations: OH-Pak SB-G, OH-Pak SB 804 HQ and OH-Pak SB 802.5 HQ from Shodex, Japan; eluent: 80% by volume of an aqueous solution of HCO₂NH₄ (0.05 mol/l) and 20% by volume of acetonitrile; injection volume: 100 µl; flow rate: 0.5 ml/min). The calibration to determine the average molar mass was carried out using linear poly(ethylene oxide) and polyethylene glycol standards.

### Production of the dried accelerator compositions

X-Seed® 100 (BASF Construction Chemicals) was used as starting material (i.e. aqueous accelerator component to be dried). The X-Seed® suspension was mixed with 5% by weight of spraying aid (PCEs KP1 to KP9) based on the solids content of X-Seed® 100 for 10 minutes before drying. The figure 5% by weight of spraying aid is based on the solids content of the spraying aid. This means that 5% by weight calculated as water-free polycarboxylate ether are added in each case. The solids content of the X-Seed® 100 is 21.7% by weight. The preparation formed was converted into the pulverulent state by means of spray drying using a drier from Niro at inlet temperatures of 160°C and outlet temperatures of 60 - 110°C under a nitrogen atmosphere (Table 3).

**Table 3: Experimental conditions for spray drying**

| Experiment | Drying additive | Drying temperature (°C) |
|---|---|---|
| Powder 1 (comp.) | X-Seed® 100 dried without additive | 60 |
| Powder 0 (comp.) | Polyacrylic acid | 50 - 60 |
| Powder 2 | KP1 | 60 |
| Powder 3 | KP2 | 60 |
| Powder 4 | KP3 | 60 |
| Powder 5 | KP4 | 60 |
| Powder 6 | KP5 | 60 |
| Powder 7 | KP6 | 60 |
| Powder 8 | KP7 | 60 |
| Powder 9 | KP8 | 60 |
| Powder 10 | KP9 | 60 |
| Powder 11 | KP2 | 80 |
| Powder 12 | KP2 | 90 |
| Powder 13 | KP2 | 100 |
| Powder 14 | KP2 | 110 |

### Use tests (mortar) on the dried accelerator compositions

The effectiveness of the powders was tested by means of a standard mortar test. The mortar tests were carried out in accordance with DIN EN 197. To determine the compressive strength, the prisms were cast in Styropor moulds or in steel moulds. To be able to compare the measurements using the various accelerators, the amount added was in each case selected so that 1.44% by weight of the solid of X-Seed® 100, based on the mass of the cement, was added to the mortar in each experiment. This means that, of course, X-Seed® 100 is not added as such but instead a corresponding amount of solids content of the starting material X-Seed® 100 was added in the form of the processed pulverulent product.

The results of the tests are summarized in Table 4.

Mortar test at 20°C, 65% atmospheric humidity:
450 g of cement (Milke CEM I 52.5 R)
1350 g of standard sand
225 g of water

**Table 4: Results of the mortar tests**

| Experiment | Accelerator | Accelerator (g) | Compressive strength after 6 h (MPa) | Mould |
|---|---|---|---|---|
| 1 (Comp.) | - | 0 | ∼ 0.5 | Styropor |
| 2 (Comp.) | X-Seed®100 Suspension | 31.34 | 15.4 | Styropor |
| 3 (Comp.) | Powder 1 (no additives) | 6.43 | 7.2 | Styropor |
| 4 (Comp.) | Ca formate (100%) | 1.13 | not measurable | Styropor |
| 5 (Comp.) | Ca formate (100%) | 2.25 | 0.5 | Styropor |
| 6 (Comp.) | Ca formate (100%) | 4.50 | 2.2 | Styropor |
| 7 (Comp.) | Ca formate (100%) | 9.00 | 5.9 | Styropor |
| 8 (Comp.) | Ca(NO₃)₂ · 4 H₂O | 1.63 | not measurable | Styropor |
| 9 (Comp.) | Ca(NO₃)₂ · 4 H₂O | 3.24 | 1.8 | Styropor |
| 10 (Comp.) | Ca(NO₃)₂ · 4 H₂O | 6.48 | 2.2 | Styropor |
| 11 (Comp.) | Ca(NO₃)₂ · 4 H₂O | 12.95 | 4.4 | Styropor |
| 12 (Comp.) | Powder 0 (with PAA) | 6.82 | 7.4 | Styropor |
| 13 | Powder 2 (KP1) | 6.82 | 13.6 | Styropor |
| 14 | Powder 3 (KP2) | 6.82 | 15.2 | Styropor |
| 15 | Powder 4 (KP3) | 6.82 | 15.8 | Styropor |
| 16 | Powder 5 (KP4) | 6.82 | 13.9 | Styropor |
| 17 | Powder 6 (KP5) | 6.82 | 15.0 | Styropor |
| 18 | Powder 7 (KP6) | 6.82 | 14.7 | Styropor |
| 19 | Powder 8 (KP7) | 6.82 | 12.5 | Styropor |
| 20 | Powder 9 (KP8) | 6.82 | 12.4 | Styropor |
| 21 | Powder 10 (KP9: MVA® 2500) | 6.82 | 8.6 | Styropor |
| 22 (Comp.) | - | 0 | not measurable | Steel mould |
| 23 (Comp.) | X-Seed®100 suspension | 31.34 | 9.7 | Steel mould |
| 24 | Powder 11 (KP2) | 6.82 | 9.1 | Steel mould |
| 25 | Powder 12 (KP2) | 6.82 | 8.7 | Steel mould |
| 26 | Powder 13 (KP2) | 6.82 | 8.3 | Steel mould |
| 27 | Powder 14 (KP2) | 6.82 | 7.7 | Steel mould |

In the mortar tests for pulverulent accelerators (Table 4), it can be seen, in particular, that even at very high added amounts of the comparative accelerators calcium formate and calcium nitrate it is not possible to even approximately achieve the high accelerator activities (early strengths) as the pulverulent products according to the invention. The pulverulent products according to the invention even achieve virtually the early strength of the liquid reference X-Seed®100 (suspension), which indicates only very small decreases in the accelerator activity of X-Seed® 100 during drying. A relatively high charge density in the polycarboxylate ethers (cf., in particular, KP2, KP3, KP4 and KP5), in particular, has a favourable effect on the early strengths. These effects can be attributed to the surprisingly high stabilizing action exerted during drying of the polycarboxylate ethers added before the drying step. Polyacrylic acids, for example, which do not have appropriate polyether structural units (Comparative Example 12) do not display this effect. In addition, none of the comparative examples of Table 4, in particular not the Comparative Examples 4 to 11 (conventional accelerators based on calcium formate or calcium nitrate), are able to achieve similarly good final strengths (after 28 days) as the pulverulent accelerators according to the invention.

## Claims

1. Process for producing solid compositions containing calcium silicate hydrate and a water-soluble comb polymer which is suitable as plasticizer for hydraulic binders, wherein the following process steps are carried out:
a) mixing of an aqueous suspension containing calcium silicate hydrate with at least one water-soluble comb polymer which is suitable as plasticizer for hydraulic binders,
b) optionally setting of a suitable solids content of the product from step a) by dilution with water and
c) drying of the product from step a) or b),
wherein the solid composition has a weight ratio of the (co)polymer or (co)polymers to the calcium silicate hydrate of from 1/100 to 100/1 and wherein the water soluble comb polymer which is suitable as plasticizer for hydraulic binders has an average ratio of the number of moles of carboxyl and/or carboxylate groups to the total molar mass of the comb polymer from 1/200 to 1/1500 mol/(g/mol), wherein cations, including protons, associated with the comb polymer are not taken into account in calculating the total molar mass of the comb polymer.

2. Process according to claim 1, **characterized in that** the drying of the product form step a) or b) is done at temperatures below 150 °C.

3. Process according to any of Claims 1 to 2, **characterized in that** the aqueous suspension containing calcium silicate hydrate used in process step a) has been obtained by reaction of a water-soluble calcium compound with a water-soluble silicate compound in the presence of an aqueous solution containing a water-soluble comb polymer which is suitable as plasticizer for hydraulic binders or **characterized in that** the aqueous suspension of calcium silicate hydrate used in process step a) has been obtained by reaction of a calcium compound and an aqueous solution containing a water-soluble comb polymer which is suitable as plasticizer for hydraulic binders.

4. Process according to any of Claims 1 to 2, **characterized in that** the aqueous suspension containing calcium silicate hydrate used in process step a) has been obtained by reaction of a water-soluble calcium compound with a water-soluble silicate compound in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups in the (co)polymer is from 1/20 to 20/1, or **in that** the aqueous suspension of calcium silicate hydrate used in process step a) has been obtained by reaction of a calcium compound with a silicon dioxide-containing compound under alkaline conditions in the presence of an aqueous solution of a (co)polymer having carboxylic acid groups and/or carboxylate groups and sulphonic acid groups and/or sulphonate groups, where the molar ratio of the number of carboxylic acid groups and/or carboxylate groups to the sulphonic acid groups and/or sulphonate groups in the (co)polymer is from 1/20 to 20/1.

5. Process according to any of Claims 1 to 4, **characterized in that** the water-soluble comb polymer which is suitable as plasticizer for hydraulic binders which is used in process step a) is present as a copolymer containing ether functions and also side chains having acid functions on the main chain.

6. Process according to any of Claims 1 to 5, **characterized in that** the water-soluble comb polymer which is suitable as plasticizer for hydraulic binders which is used is present as a copolymer which has been produced by free-radical polymerization in the presence of acid monomers and polyether macromonomers in such a way that a total of at least 45 mol% of all structural units of the copolymer have been produced by copolymerization of acid monomers and polyether macromonomers.

7. Process according to Claim 6, **characterized in that** the free-radical copolymerization has given a copolymer having a structural unit which can be obtained by copolymerization of the acid monomer and corresponds to one of the general formulae (Ia), (Ib), (Ic) and/or (Id): 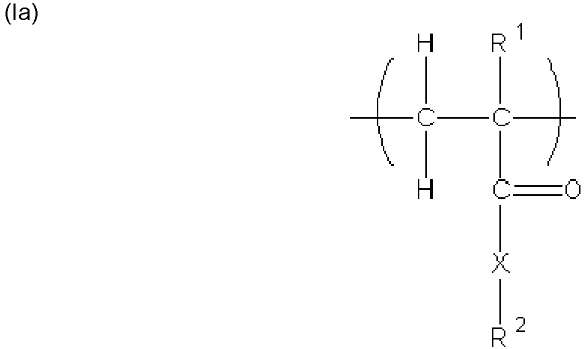 where
the radicals R¹ are identical or different and are each H and/or an unbranched or branched C₁ - C₄ alkyl group;
the radicals X are identical or different and are each NH-(CₙH₂ₙ) where n = 1, 2, 3 or 4 or O-(CₙH₂ₙ) where n = 1, 2, 3 or 4 or an absent unit;
the radicals R² are identical or different and are each OH, SO₃H, PO₃H₂, O-PO₃H₂ or para-substituted C₆H₄-SO₃H, with the proviso that if X is an absent unit, R² is OH; 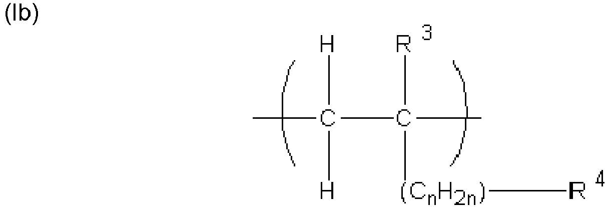
where
the radicals R³ are identical or different and are each H or an unbranched or branched C₁ - C₄ alkyl group;
n = 0, 1, 2, 3 or 4
the radicals R⁴ are identical or different and are each SO₃H, PO₃H₂, O-PO₃H₂ or para-substituted C₆H₄-SO₃H; 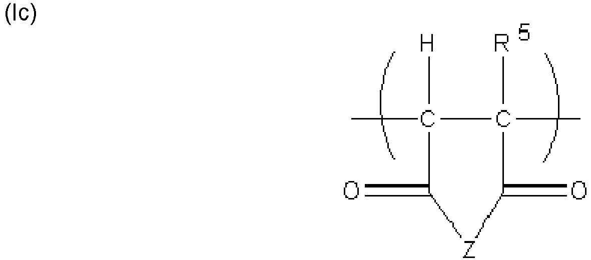
where
the radicals R⁵ are identical or different and are each H or an unbranched or branched C₁ - C₄ alkyl group;
the radicals Z are identical or different and are each O or NH; 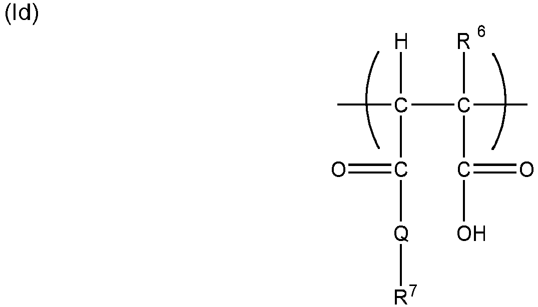
where
the radicals R⁶ are identical or different and are each H or an unbranched or branched C₁ - C₄ alkyl group;
the radicals Q are identical or different and are each NH or O;
the radicals R⁷ are identical or different and are each H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄)-OPO₃H₂ or (CₘH₂ₘ)ₑ-O-(A'O)_{α}-R⁹ where m = 0, 1, 2, 3 or 4, e = 0, 1, 2, 3 or 4, A' = C_{x'}H_{2x'} where x' = 2, 3, 4 or 5 or CH₂C(C₆H₅)H-, α = an integer from 1 to 350 and the radicals R⁹ are identical or different and are each an unbranched or branched C₁ - C₄ alkyl group.

8. Process according to Claim 6 or 7, **characterized in that** the free-radical copolymerization has given a copolymer containing a structural unit which can be obtained by copolymerization of the polyether macromonomer and corresponds to one of the general formulae (IIa), (IIb), (IIc) and/or (IId): 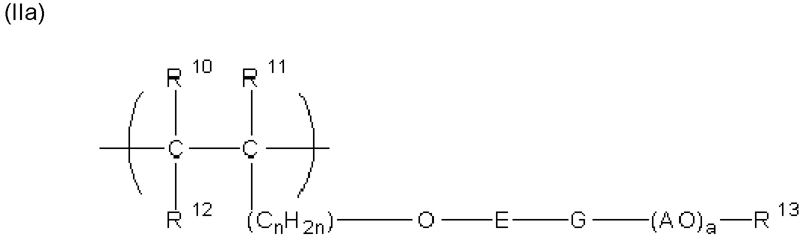 where
R¹⁰, R¹¹ and R¹² are identical or different and are each, independently of one another, H or an unbranched or branched C₁ - C₄ alkyl group;
the radicals E are identical or different and are each an unbranched or branched C₁ - C₆ alkylene group, a cyclohexylen group, CH₂-C₆H₁₀, ortho-, meta- or para-substituted C₆H₄ or an absent unit;
the radicals G are identical or different and are each O, NH or CO-NH, with the proviso that if E is an absent unit, G is also an absent unit;
the radicals A are identical or different and are each CₓH₂ₓ where x = 2, 3, 4 or 5 or CH₂CH(C₆H₅);
the indices n are identical or different and are each 0, 1, 2, 3, 4 or 5;
the indices a are identical or different and are each an integer from 2 to 350;
the radicals R¹³ are identical or different and are each H, an unbranched or branched C₁ - C₄ alkyl group, CO-NH₂ or COCH₃; 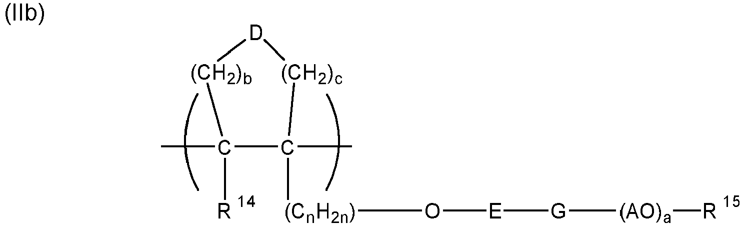
where
the radicals R¹⁴ are identical or different and are each H or an unbranched or branched C₁ - C₄ alkyl group;
the radicals E are identical or different and are each an unbranched or branched C₁ - C₆ alkylene group, a cyclohexylen group, CH₂-C₆H₁₀, ortho-, meta- or para-substituted C₆H₄ or an absent unit;
the radicals G are identical or different and are each an absent unit, O, NH or CO-NH, with the proviso that if E is an absent unit, G is also an absent unit;
the radicals A are identical or different and are each CₓH₂ₓ where x = 2, 3, 4 or 5 or CH₂CH(C₆H₅);
the indices n are identical or different and are each 0, 1, 2, 3, 4 or 5;
the indices a are identical or different and are each an integer from 2 to 350;
the radicals D are identical or different and are each an absent unit, NH or O, with the proviso that if D is an absent unit: b = 0, 1, 2, 3 or 4 and c = 0, 1, 2, 3 or 4, where b + c = 3 or 4, and with the proviso that when D is NH or O: b = 0, 1, 2 or 3, c = 0, 1, 2 or 3, where b + c = 2 or 3;
the radicals R¹⁵ are identical or different and are each H, an unbranched or branched C₁ - C₄ alkyl group, CO-NH₂ or COCH₃; 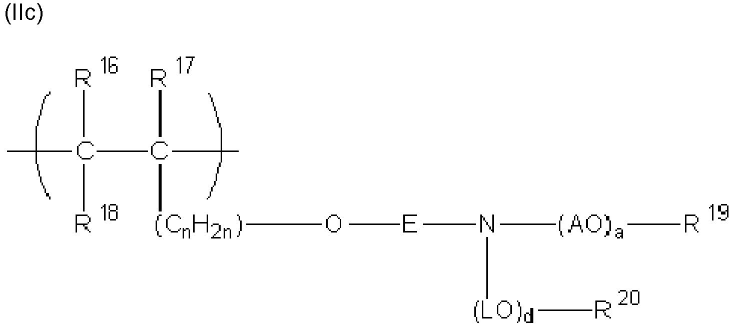
where
R¹⁶, R¹⁷ and R¹⁸ are identical or different and are each, independently of one another, H or an unbranched or branched C₁ - C₄ alkyl group;
the radicals E are identical or different and are each an unbranched or branched C₁ - C₆ alkylene group, a cyclohexylen group, CH₂-C₆H₁₀, ortho-, meta- or para-substituted C₆H₄ or an absent unit;
the radicals A are identical or different and are each CₓH₂ₓ where x = 2, 3, 4 or 5 CH₂-CH(C₆H₅);
the indices n are identical or different and are each 0, 1, 2, 3, 4 or 5;
the radicals L are identical or different and are each CₓH₂ₓ where x = 2, 3, 4 or 5 or CH₂-CH(C₆H₅);
the indices a are identical or different and are each an integer from 2 to 350;
the indices d are identical or different and are each an integer from 1 to 350;
the radicals R¹⁹ are identical or different and are each H and/or an unbranched or branched C₁ - C₄ alkyl group,
the radicals R²⁰ are identical or different and are each H or an unbranched C₁ - C₄ alkyl group; 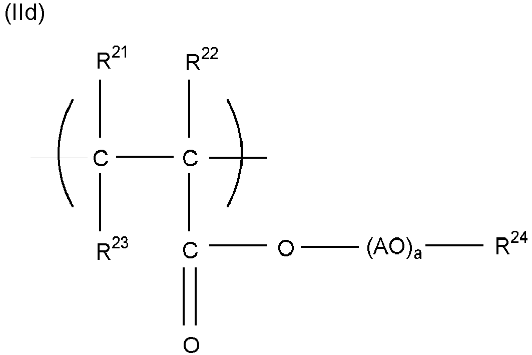
where
R²¹, R²² and R²³ are identical or different and are each, independently of one another, H or an unbranched or branched C₁ - C₄ alkyl group;
the radicals A are identical or different and are each CₓH₂ₓ where x = 2, 3, 4 or 5 or CH₂CH(C₆H₅);
the indices a are identical or different and are each an integer from 2 to 350;
the radicals R²⁴ are identical or different and are each H or an unbranched or branched C₁ - C₄ alkyl radical.

9. Process according to any of Claims 1 to 8, **characterized in that** the drying process c) is spray drying.

## Patentansprüche

1. Verfahren zur Herstellung von festen Zusammensetzungen, die Calciumsilikathydrat und ein wasserlösliches, sich als Fließmittel für hydraulische Bindemittel eignendes Kammpolymer enthalten, wobei folgende Verfahrensschritte durchgeführt werden:
a) Vermischen einer wässrigen Suspension, die Calciumsilikathydrat enthält, mit mindestens einem wasserlöslichen, sich als Fließmittel für hydraulische Bindemittel eignenden Kammpolymer,
b) optional Einstellen eines geeigneten Feststoffgehalts des Produkts aus Schritt a) durch Verdünnen mit Wasser und
c) Trocknen des Produkts aus Schritt a) oder b), wobei die feste Zusammensetzung ein Gewichtsverhältnis des (Co)polymers bzw. der (Co)polymere zum Calciumsilikathydrat von 1/100 bis 100/1 aufweist und wobei das wasserlösliche, sich als Fließmittel für hydraulische Bindemittel eignende Kammpolymer ein durchschnittliches Verhältnis der Molzahl von Carboxyl- und/oder Carboxylatgruppen zur Gesamtmolmasse des Kammpolymers von 1/200 bis 1/1500 mol/(g/mol) aufweist, wobei dem Kammpolymer zuzuordnende Kationen, einschließlich Protonen, bei der Berechnung der Gesamtmolmasse des Kammpolymers nicht berücksichtigt werden.

2. Verfahren nach Anspruch 1, **dadurch gekennzeichnet, dass** das Trocknen des Produkts aus Schritt a) oder b) bei Temperaturen unter 150 °C erfolgt.

3. Verfahren nach einem der Ansprüche 1 bis 2, **dadurch gekennzeichnet, dass** die in Verfahrensschritt a) eingesetzte wässrige Suspension, die Calciumsilikathydrat enthält, durch Umsetzung einer wasserlöslichen Calciumverbindung mit einer wasserlöslichen Silikatverbindung in Anwesenheit einer wässrigen Lösung, die ein wasserlösliches, sich als Fließmittel für hydraulische Bindemittel eignendes Kammpolymer enthält, erhalten wurde, oder **dadurch gekennzeichnet, dass** die in Verfahrensschritt a) eingesetzte wässrige Suspension von Calciumsilikathydrat durch Umsetzung einer Calciumverbindung und einer wässrigen Lösung, die ein wasserlösliches, sich als Fließmittel für hydraulische Bindemittel eignendes Kammpolymer enthält, erhalten wurde.

4. Verfahren nach einem der Ansprüche 1 bis 2, **dadurch gekennzeichnet, dass** die in Verfahrensschritt a) eingesetzte wässrige Suspension, die Calciumsilikathydrat enthält, durch Umsetzung einer wasserlöslichen Calciumverbindung mit einer wasserlöslichen Silikatverbindung in Anwesenheit einer wässrigen Lösung eines (Co)polymers, das Carbonsäuregruppen und/oder Carboxylatgruppen und Sulfonsäuregruppen und/oder Sulfonatgruppen aufweist, erhalten wurde, wobei das Molverhältnis der Anzahl von Carbonsäuregruppen und/oder Carboxylatgruppen zu den Sulfonsäuregruppen und/oder Sulfonatgruppen im (Co)polymer 1/20 bis 20/1 beträgt, oder dass die in Verfahrensschritt a) eingesetzte wässrige Suspension von Calciumsilikathydrat durch Umsetzung einer Calciumverbindung mit einer siliciumdioxidhaltigen Verbindung unter alkalischen Bedingungen in Anwesenheit einer wässrigen Lösung eines (Co)polymers, das Carbonsäuregruppen und/oder Carboxylatgruppen und Sulfonsäuregruppen und/oder Sulfonatgruppen aufweist, erhalten wurde, wobei das Molverhältnis der Anzahl von Carbonsäuregruppen und/oder Carboxylatgruppen zu den Sulfonsäuregruppen und/oder Sulfonatgruppen im (Co)polymer bzw. in den (Co)polymeren 1/20 bis 20/1 beträgt.

5. Verfahren nach einem der Ansprüche 1 bis 4, **dadurch gekennzeichnet, dass** das in Verfahrensschritt a) verwendete wasserlösliche, sich als Fließmittel für hydraulische Bindemittel eignende Kammpolymer als Copolymer vorliegt, welches Etherfunktionen sowie Säurefunktionen aufweisende Seitenketten an der Hauptkette enthält.

6. Verfahren nach einem der Ansprüche 1 bis 5, **dadurch gekennzeichnet, dass** das verwendete wasserlösliche, sich als Fließmittel für hydraulische Bindemittel eignende Kammpolymer als Copolymer vorliegt, welches durch radikalische Polymerisation in Anwesenheit von Säuremonomeren und Polyether-Makromonomeren erzeugt wurde, so dass insgesamt mindestens 45 Mol-% aller Struktureinheiten des Copolymers durch Einpolymerisation von Säuremonomeren und Polyether-Makromonomeren erzeugt wurden.

7. Verfahren nach Anspruch 6, **dadurch gekennzeichnet, dass** durch die radikalische Copolymerisation ein Copolymer erhalten wurde, welches eine durch Einpolymerisation des Säuremonomers erhältliche Struktureinheit aufweist, die einer der allgemeinen Formeln (Ia), (Ib), (Ic) und/oder (Id) entspricht: 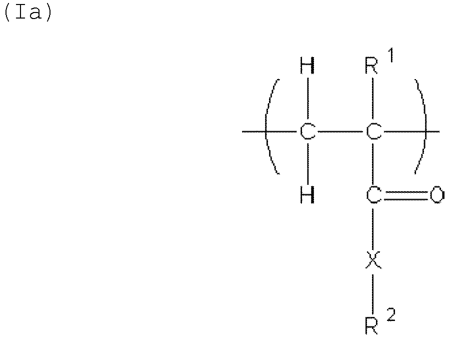 wobei
die Reste R¹ gleich oder verschieden sind und jeweils für H und/oder eine unverzweigte oder verzweigte C₁-C₄-Alkylgruppe stehen;
die Reste X gleich oder verschieden sind und jeweils für NH-(CₙH₂ₙ) mit n = 1, 2, 3 oder 4 oder O-(CₙH₂ₙ) mit n = 1, 2, 3 oder 4 oder eine nicht vorhandene Einheit stehen;
die Reste R² gleich oder verschieden sind und jeweils für OH, SO₃H, PO₃H₂, O-PO₃H₂ oder para-substituiertes C₆H₄-SO₃H stehen, mit der Maßgabe, dass dann, wenn X für eine nicht vorhandene Einheit steht, R² für OH steht; 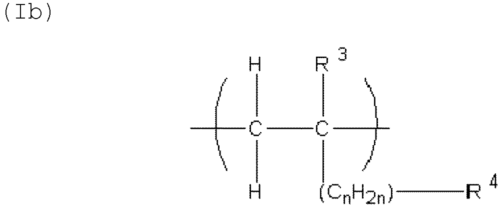
wobei
die Reste R³ gleich oder verschieden sind und jeweils für H oder eine unverzweigte oder verzweigte C₁-C₄-Alkylgruppe stehen;
n = 0, 1, 2, 3 oder 4,
die Reste R⁴ gleich oder verschieden sind und jeweils für SO₃H, PO₃H₂, O-PO₃H₂ oder para-substituiertes C₆H₄-SO₃H stehen; 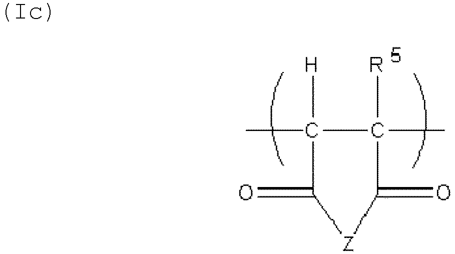
wobei
die Reste R⁵ gleich oder verschieden sind und jeweils für H oder eine unverzweigte oder verzweigte C₁-C₄-Aalkylgruppe stehen;
die Reste Z gleich oder verschieden sind und jeweils für O oder NH stehen; 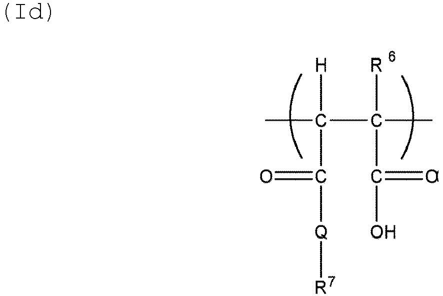
wobei
die Reste R⁶ gleich oder verschieden sind und jeweils für H oder eine unverzweigte oder verzweigte C₁-C₄-Alkylgruppe stehen;
die Reste Q gleich oder verschieden sind und jeweils für NH oder O stehen;
die Reste R⁷ gleich oder verschieden sind und jeweils für H, (CₙH₂ₙ)-SO₃H mit n = 0, 1, 2, 3 oder 4, (CₙH₂ₙ) - OH mit n = 0, 1, 2, 3 oder 4; (CₙH₂ₙ)-PO₃H₂ mit n = 0, 1, 2, 3 oder 4, (CₙH₂ₙ) -OPO₃H₂ mit n= 0, 1, 2, 3 oder 4, (C₆H₄)-SO₃H, (C₆H₄)-PO₃H₂, (C₆H₄)-OPO₃H₂ oder (CₘH₂ₘ)ₑ-O-(A'O)_{α}-R⁹ mit m = 0, 1, 2, 3 oder 4, e = 0, 1, 2, 3 oder 4, A' = C_{x'}H_{2x'} mit x' = 2, 3, 4 oder 5 oder CH₂C (C₆H₅)H-, α = eine ganze Zahl von 1 bis 350, wobei die Reste R⁹ gleich oder verschieden sind und jeweils für eine unverzweigte oder verzweigte C₁-C₄-Alkylgruppe stehen, stehen.

8. Verfahren nach Anspruch 6 oder 7, **dadurch gekennzeichnet, dass** durch die radikalische Copolymerisation ein Copolymer erhalten wurde, welches eine durch Einpolymerisation des Polyether-Makromonomers erhältliche Struktureinheit enthält, die einer der allgemeinen Formeln (IIa), (IIb), (IIc) und/oder (IId) entspricht: 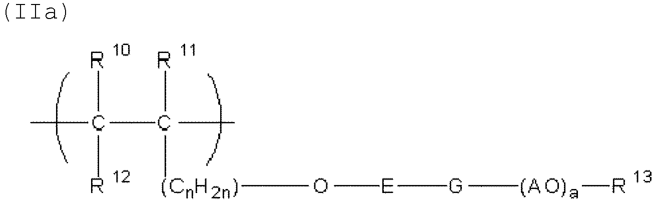 wobei
R¹⁰, R¹¹ und R¹² gleich oder verschieden und jeweils unabhängig voneinander für H oder eine unverzweigte oder verzweigte C₁-C₄-Alkylgruppe stehen;
die Reste E gleich oder verschieden sind und jeweils für eine unverzweigte oder verzweigte C₁-C₆-Alkylengruppe, eine Cyclohexylengruppe, CH₂-C₆H₁₀, ortho-, meta- oder para-substituiertes C₆H₄ oder eine nicht vorhandene Einheit stehen;
die Reste G gleich oder verschieden sind und jeweils für O, NH oder CO-NH stehen, mit der Maßgabe, dass dann, wenn E für eine nicht vorhandene Einheit steht, G ebenfalls für eine nicht vorhandene Einheit steht;
die Reste A gleich oder verschieden sind und jeweils für CₓH₂ₓ mit x = 2, 3, 4 oder 5 oder CH₂CH(C₆H₅) stehen;
die Indices n gleich oder verschieden sind und jeweils für 0, 1, 2, 3, 4 oder 5 stehen;
die Indices a gleich oder verschieden sind und jeweils für eine ganze Zahl von 2 bis 350 stehen;
die Reste R¹³ gleich oder verschieden sind und jeweils für H, eine unverzweigte oder verzweigte C₁-C₄-Alkylgruppe, CO-NH₂ oder COCH₃ stehen; 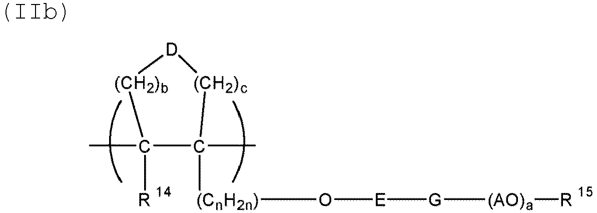
wobei
die Reste R¹⁴ gleich oder verschieden sind und jeweils für H oder eine unverzweigte oder verzweigte C₁-C₄-Alkylgruppe stehen;
die Reste E gleich oder verschieden sind und jeweils für eine unverzweigte oder verzweigte C₁-C₆-Alkylengruppe, eine Cyclohexylengruppe, CH₂-C₆H₁₀, ortho-, meta- oder para-substituiertes C₆H₄ oder eine nicht vorhandene Einheit stehen;
die Reste G gleich oder verschieden sind und jeweils für O, NH oder CO-NH stehen, mit der Maßgabe, dass dann, wenn E für eine nicht vorhandene Einheit steht, G ebenfalls für eine nicht vorhandene Einheit steht;
die Reste A gleich oder verschieden sind und jeweils für CₓH₂ₓ mit x = 2, 3, 4 oder 5 oder CH₂CH(C₆H₅) stehen;
die Indices n gleich oder verschieden sind und jeweils für 0, 1, 2, 3, 4 oder 5 stehen;
die Indices a gleich oder verschieden sind und jeweils für eine ganze Zahl von 2 bis 350 stehen;
die Reste D gleich oder verschieden sind und jeweils für eine nicht vorhandene Einheit, NH oder O stehen, mit der Maßgabe, dass dann, wenn D für eine nicht vorhandene Einheit steht: b = 0, 1, 2, 3 oder 4 und c = 0, 1, 2, 3 oder 4, wobei b + c = 3 oder 4, und mit der Maßgabe, dass dann, wenn D für NH oder O steht: b = 0, 1, 2 oder 3, c = 0, 1, 2 oder 3, wobei b + c = 2 oder 3;
die Reste R¹⁵ gleich oder verschieden sind und jeweils für H, eine unverzweigte oder verzweigte C₁-C₄-Alkylgruppe, CO-NH₂ oder COCH₃ stehen; 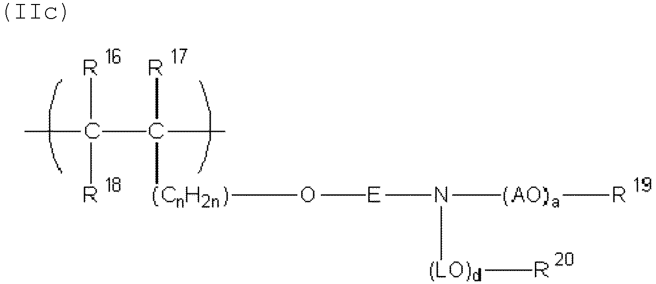
wobei
R¹⁶, R¹⁷ und R¹⁸ gleich oder verschieden sind und jeweils unabhängig voneinander für H oder eine unverzweigte oder verzweigte C₁-C₄-Alkylgruppe stehen;
die Reste E gleich oder verschieden sind und jeweils für eine unverzweigte oder verzweigte C₁-C₆-Alkylengruppe, eine Cyclohexylengruppe, CH₂-C₆H₁₀, ortho-, meta- oder para-substituiertes C₆H₄ oder eine nicht vorhandene Einheit stehen;
die Reste A gleich oder verschieden sind und jeweils für CₓH₂ₓ mit x = 2, 3, 4 oder 5 oder CH₂CH(C₆H₅) stehen;
die Indices n gleich oder verschieden sind und jeweils für 0, 1, 2, 3, 4 oder 5 stehen;
die Reste L gleich oder verschieden sind und jeweils für CₓH₂ₓ mit x = 2, 3, 4 oder 5 oder CH₂-CH(C₆-H₅) stehen;
die Indices a gleich oder verschieden sind und jeweils für eine ganze Zahl von 2 bis 350 stehen;
die Indices d gleich oder verschieden sind und jeweils für eine ganze Zahl von 1 bis 350 stehen;
die Reste R¹⁹ gleich oder verschieden sind und jeweils für H und/oder eine unverzweigte oder verzweigte C₁-C₄-Alkylgruppe stehen;
die Reste R²⁰ gleich oder verschieden sind und jeweils für H oder eine unverzweigte C₁-C₄-Alkylgruppe stehen; 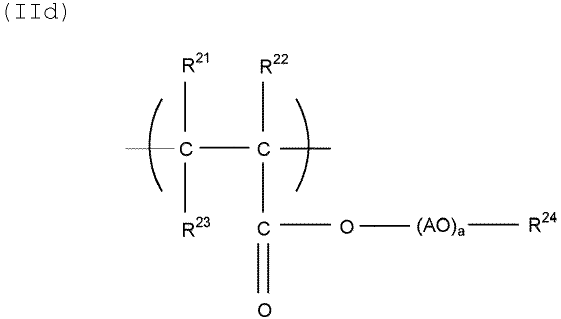
wobei
R²¹, R²² und R²³ gleich oder verschieden sind und jeweils unabhängig voneinander für H oder eine unverzweigte oder verzweigte C₁-C₄-Alkylgruppe stehen;
die Reste A gleich oder verschieden sind und jeweils für CₓH₂ₓ mit x = 2, 3, 4 oder 5 oder CH₂CH(C₆H₅) stehen;
die Indices a gleich oder verschieden sind und jeweils für eine ganze Zahl von 2 bis 350 stehen;
die Reste R²⁴ gleich oder verschieden sind und jeweils für H oder einen unverzweigten oder verzweigten C₁-C₄-Alkylrest stehen.

9. Verfahren nach einem der Ansprüche 1 bis 8, **dadurch gekennzeichnet, dass** es sich bei dem Trocknungsverfahren c) um Sprühtrocknung handelt.

## Revendications

1. Procédé pour la production de compositions solides contenant du silicate de calcium hydraté et un polymère en peigne soluble dans l'eau qui est approprié en tant que plastifiant pour des liants hydrauliques, les étapes de procédé suivantes étant mises en œuvre :
a) mélange d'une suspension aqueuse contenant du silicate de calcium hydraté avec au moins un polymère en peigne soluble dans l'eau qui est approprié en tant que plastifiant pour des liants hydrauliques,
b) éventuellement prise d'un contenu en solides approprié du produit de l'étape a) par dilution avec de l'eau et
c) séchage du produit de l'étape a) ou b),
la composition solide possédant un rapport en poids du (co)polymère ou des (co)polymères sur le silicate de calcium hydraté allant de 1/100 à 100/1 et le polymère en peigne soluble dans l'eau qui est approprié en tant que plastifiant pour des liants hydrauliques possédant un rapport moyen du nombre de moles de groupes carboxyle et/ou carboxylate sur la masse molaire totale du polymère en peigne de 1/200 à 1/1 500 mole/(g/mole), dans lequel des cations, y compris des protons, associés au polymère en peigne ne sont pas pris en compte dans le calcul de la masse molaire totale du polymère en peigne.

2. Procédé selon la revendication 1, **caractérisé en ce que** le séchage du produit de l'étape a) ou b) est réalisé à des températures inférieures à 150 °C.

3. Procédé selon l'une quelconque des revendications 1 et 2, **caractérisé en ce que** la suspension aqueuse contenant le silicate de calcium hydraté utilisée dans l'étape de procédé a) a été obtenue par réaction d'un composé du calcium soluble dans l'eau avec un composé de silicate soluble dans l'eau en la présence d'une solution aqueuse contenant un polymère en peigne soluble dans l'eau qui est approprié en tant que plastifiant pour des liants hydrauliques ou **caractérisé en ce que** la suspension aqueuse de silicate de calcium hydraté utilisée dans l'étape de procédé a) a été obtenue par réaction d'un composé du calcium et d'une solution aqueuse contenant un polymère en peigne soluble dans l'eau qui est approprié en tant que plastifiant pour des liants hydrauliques.

4. Procédé selon l'une quelconque des revendications 1 et 2, **caractérisé en ce que** la suspension aqueuse contenant le silicate de calcium hydraté utilisée dans l'étape de procédé a) a été obtenue par réaction d'un composé du calcium soluble dans l'eau avec un composé de silicate soluble dans l'eau en la présence d'une solution aqueuse d'un (co)polymère possédant des groupes acide carboxylique et/ou des groupes carboxylate et des groupes acide sulfonique et/ou des groupes sulfonate, le rapport molaire du nombre de groupes acide carboxylique et/ou de groupes carboxylate sur les groupes acide sulfonique et/ou les groupes sulfonate dans le (co)polymère étant de 1/20 à 20/1, ou **en ce que** la suspension aqueuse de silicate de calcium hydraté utilisée dans l'étape de procédé a) a été obtenue par réaction d'un composé du calcium avec un composé contenant du dioxyde de silicium dans des conditions alcalines en la présence d'une solution aqueuse d'un (co)polymère possédant des groupes acide carboxylique et/ou des groupes carboxylate et des groupes acide sulfonique et/ou des groupes sulfonate, le rapport molaire du nombre de groupes acide carboxylique et/ou de groupes carboxylate sur les groupes acide sulfonique et/ou les groupes sulfonate dans le (co)polymère étant de 1/20 à 20/1.

5. Procédé selon l'une quelconque des revendications 1 à 4, **caractérisé en ce que** le polymère en peigne soluble dans l'eau qui est approprié en tant que plastifiant pour des liants hydrauliques qui est utilisé dans l'étape de procédé a) est présent en tant que copolymère contenant des fonctions éther et également des chaînes latérales possédant des fonctions de type acide sur la chaîne principale.

6. Procédé selon l'une quelconque des revendications 1 à 5, **caractérisé en ce que** le polymère en peigne soluble dans l'eau qui est approprié en tant que plastifiant pour des liants hydrauliques qui est utilisé est présent en tant que copolymère qui a été produit par polymérisation par voie radicalaire libre en la présence de monomères de type acide et de macromonomères de type polyéther de telle manière qu'un total d'au moins 45 % en moles de tous les motifs structuraux du copolymère a été produit par copolymérisation de monomères de type acide et de macromonomères de type polyéther.

7. Procédé selon la revendication 6, **caractérisé en ce que** la copolymérisation par voie radicalaire libre a donné un copolymère possédant un motif structural qui peut être obtenu par copolymérisation du monomère de type acide et correspond à l'une des formules générales (Ia), (Ib), (Ic) et/ou (Id) : 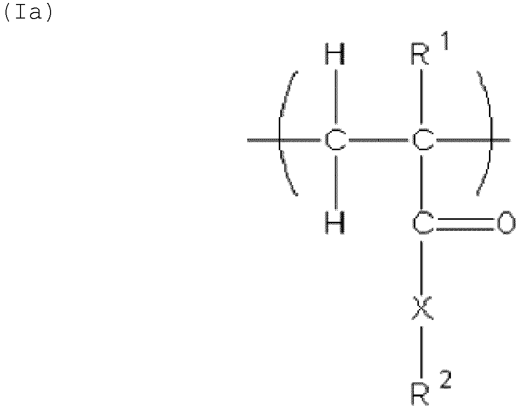 dans laquelle
les radicaux R¹ sont identiques ou différents et sont chacun H et/ou un groupe C₁₋₄ alkyle non ramifié ou ramifié ;
les radicaux X sont identiques ou différents et sont chacun NH-(CₙH₂ₙ), où n = 1, 2, 3 ou 4 ou O-(CₙH₂ₙ), où n = 1, 2, 3 ou 4 ou un motif absent ; les radicaux R² sont identiques ou différents et sont chacun OH, SO₃H, PO₃H₂, O-PO₃H₂ ou C₆H₄-SO₃H substitué en para, à la condition que si X est un motif absent, R² est OH ; 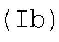 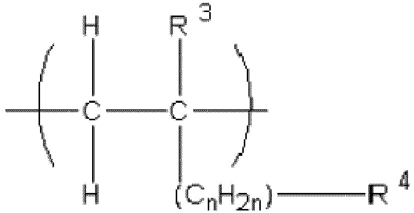
dans laquelle
les radicaux R³ sont identiques ou différents et sont chacun H ou un groupe C₁₋₄ alkyle non ramifié ou ramifié ;
n = 0, 1, 2, 3 ou 4
les radicaux R⁴ sont identiques ou différents et sont chacun SO₃H, PO₃H₂, O-PO₃H₂ ou C₆H₄-SO₃H substitué en para ; 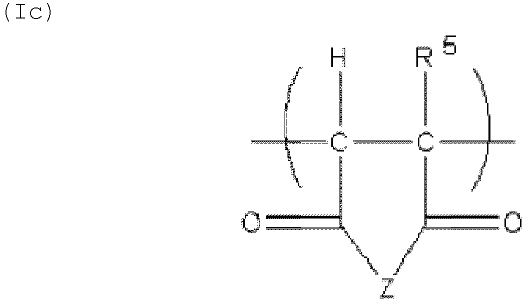
dans laquelle
les radicaux R⁵ sont identiques ou différents et sont chacun H ou un groupe C₁₋₄ alkyle non ramifié ou ramifié ;
les radicaux Z sont identiques ou différents et sont chacun O ou NH ; 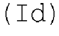 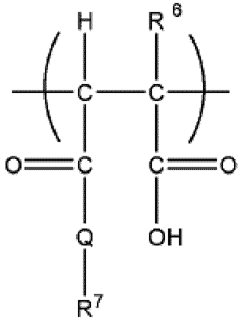
dans laquelle
les radicaux R⁶ sont identiques ou différents et sont chacun H ou un groupe C₁₋₄ alkyle non ramifié ou ramifié ;
les radicaux Q sont identiques ou différents et sont chacun NH ou O ;
les radicaux R⁷ sont identiques ou différents et sont chacun H, (CₙH₂ₙ)-SO₃H où n = 0, 1, 2, 3 ou 4, (CₙH₂ₙ)-OH où n = 0, 1, 2, 3 ou 4, (CₙH₂ₙ)-PO₃H₂ où n = 0, 1, 2, 3 ou 4, (CₙH₂ₙ)-OPO₃H₂ où n = 0, 1, 2, 3 ou 4, (C₆H₄)-SO₃H, (C₆H₄)-PO₃H₂, (C₆H₄)-OPO₃H₂ ou (CₘH₂ₘ)ₑ-O-(A'O)_{α}-R⁹ où m = 0, 1, 2, 3 ou 4, e = 0, 1, 2, 3 ou 4, A' = C_{x'}H_{2x'} où x' = 2, 3, 4 ou 5 ou CH₂C(C₆H₅)H-, α = un entier de 1 à 350 et les radicaux R⁹ sont identiques ou différents et sont chacun un groupe C₁₋₄ alkyle non ramifié ou ramifié.

8. Procédé selon la revendication 6 ou 7, **caractérisé en ce que** la copolymérisation par voie radicalaire libre a donné un copolymère contenant un motif structural qui peut être obtenu par copolymérisation du macromonomère de type polyéther et correspond à l'une des formules générales (IIa), (IIb), (IIc) et/ou (IId) : 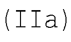 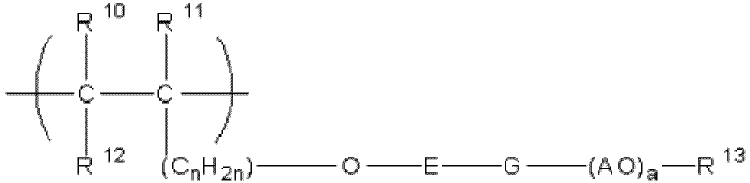 dans laquelle
R¹⁰, R¹¹ et R¹² sont identiques ou différents et sont chacun, indépendamment les uns des autres, H ou un groupe C₁₋₄ alkyle non ramifié ou ramifié ; les radicaux E sont identiques ou différents et sont chacun un groupe C₁₋₆ alkylène non ramifié ou ramifié, un groupe cyclohexylène, CH₂-C₆H₁₀, C₆H₄ substitué en ortho, en méta ou en para ou un motif absent ;
les radicaux G sont identiques ou différents et sont chacun O, NH ou CO-NH, à la condition que si E est un motif absent, G est également un motif absent ;
les radicaux A sont identiques ou différents et sont chacun CₓH₂ₓ où x = 2, 3, 4 ou 5 ou CH₂CH(C₆H₅) ;
les indices n sont identiques ou différents et sont chacun 0, 1, 2, 3, 4 ou 5 ;
les indices a sont identiques ou différents et sont chacun un entier de 2 à 350 ;
les radicaux R¹³ sont identiques ou différents et sont chacun H, un groupe C₁₋₄ alkyle non ramifié ou ramifié, CO-NH₂ ou COCH₃; 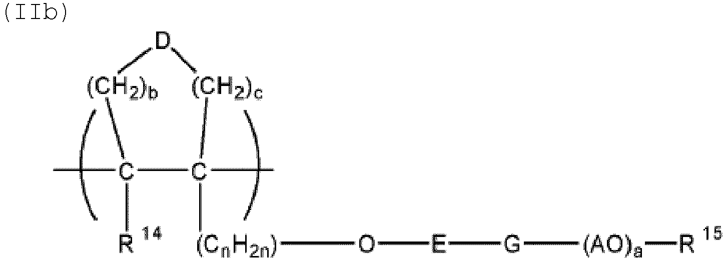
dans laquelle les radicaux R¹⁴ sont identiques ou différents et sont chacun H ou un groupe C₁₋₄ alkyle non ramifié ou ramifié ;
les radicaux E sont identiques ou différents et sont chacun un groupe C₁₋₆ alkylène non ramifié ou ramifié, un groupe cyclohexylène, CH₂-C₆H₁₀, C₆H₄ substitué en ortho, en méta ou en para ou un motif absent ;
les radicaux G sont identiques ou différents et sont chacun un motif absent, O, NH ou CO-NH, à la condition que si E est un motif absent, G est également un motif absent ;
les radicaux A sont identiques ou différents et sont chacun CₓH₂ₓ où x = 2, 3, 4 ou 5 ou CH₂CH(C₆H₅) ;
les indices n sont identiques ou différents et sont chacun 0, 1, 2, 3, 4 ou 5 ;
les indices a sont identiques ou différents et sont chacun un entier de 2 à 350 ;
les radicaux D sont identiques ou différents et sont chacun un motif absent, NH ou O, à la condition que si D est un motif absent : b = 0, 1, 2, 3 ou 4 et c = 0, 1, 2, 3 ou 4, où b + c = 3 ou 4, et à la condition que lorsque D est NH ou O : b = 0, 1, 2, ou 3 et c = 0, 1, 2, ou 3, où b + c = 2 ou 3 ;
les radicaux R¹⁵ sont identiques ou différents et sont chacun H, un groupe C₁₋₄ alkyle non ramifié ou ramifié, CO-NH₂ ou COCH₃; 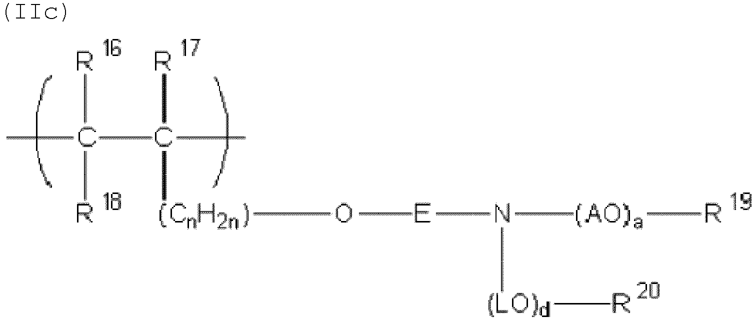
dans laquelle
R¹⁶, R¹⁷ et R¹⁸ sont identiques ou différents et sont chacun, indépendamment les uns des autres, H ou un groupe C₁₋₄ alkyle non ramifié ou ramifié ; les radicaux E sont identiques ou différents et sont chacun un groupe C₁₋₆ alkylène non ramifié ou ramifié, un groupe cyclohexylène, CH₂-C₆H₁₀, C₆H₄ substitué en ortho, en méta ou en para ou un motif absent ;
les radicaux A sont identiques ou différents et sont chacun CₓH₂ₓ où x = 2, 3, 4 ou 5 ou CH₂-CH(C₆H₅) ;
les indices n sont identiques ou différents et sont chacun 0, 1, 2, 3, 4 ou 5 ;
les radicaux L sont identiques ou différents et sont chacun CₓH₂ₓ où x = 2, 3, 4 ou 5 ou CH₂-CH(C₆H₅) ;
les indices a sont identiques ou différents et sont chacun un entier de 2 à 350 ;
les indices d sont identiques ou différents et sont chacun un entier de 1 à 350 ;
les radicaux R¹⁹ sont identiques ou différents et sont chacun H et/ou un groupe C₁₋₄ alkyle non ramifié ou ramifié,
les radicaux R²⁰ sont identiques ou différents et sont chacun H ou un groupe C₁₋₄ alkyle non ramifié ; 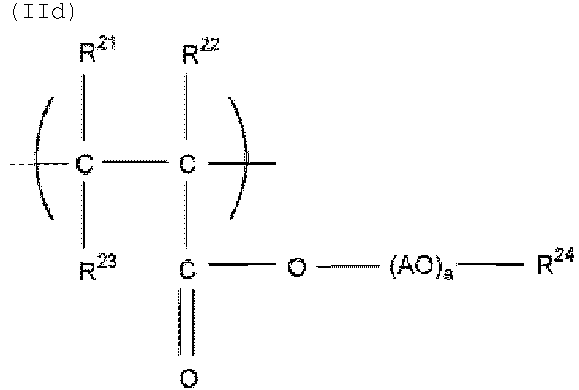
dans laquelle
R²¹, R²² et R²³ sont identiques ou différents et sont chacun, indépendamment les uns des autres, H ou un groupe C₁₋₄ alkyle non ramifié ou ramifié ; les radicaux A sont identiques ou différents et sont chacun CₓH₂ₓ où x = 2, 3, 4 ou 5 ou CH₂CH(C₆H₅) ;
les indices a sont identiques ou différents et sont chacun un entier de 2 à 350 ;
les radicaux R²⁴ sont identiques ou différents et sont chacun H ou un groupe C₁₋₄ alkyle non ramifié ou ramifié.

9. Procédé selon l'une quelconque des revendications 1 à 8, **caractérisé en ce que** le procédé de séchage c) est un séchage par pulvérisation.
